# EUROPEAN PATENT APPLICATION

(11) **EP 4 645 165 A1**
(43) Date of publication of application: **05.11.2025**
(21) Application number: 24178893.4
(22) Date of filing: 29.05.2024
(51) Int. Cl.: G06N 3/045, G06F 18/213, G06N 3/0464, G06V 10/44, G06V 10/82, G10L 15/16, G10L 25/30

(54) **CHANNELWISE FEATURE REORIENTATION AND MERGING WITH NEIGHBOURING FEATURES FOR ROBUST LOW COMPLEXITY DNN BASED AUDIO PROCESSING**

(30) Priority: 30.04.2024 EP 24173478
(71) Applicant: Fraunhofer-Gesellschaft zur Förderung der angewandten Forschung e.V., 80686 München (DE); Friedrich-Alexander-Universität Erlangen-Nürnberg, in Vertretung des Freistaates Bayern, 91058 Erlangen (DE)
(72) Inventor: The designation of the inventor has not yet been filed
(74) Representative: Zuccollo, Alberto

(57) **Abstract**

There is disclosed an apparatus (10) for processing an input information signal (20), comprising:
a feature extractor (100) for extracting a set of features (102) from the input information signal (20), the set of features (102) having a first shape,
a feature block generator (200, CR1) configured to reshape the set of features (102) from a first shape to a second shape by:
segmenting (210) the set of features (102) into at least 3 feature subsets (212, 212a-212h), each feature subset (212, 212a-212h) having a specific shape,
performing a subsampling (220, 220a, 220b) of the feature subsets (212) to generate a plurality of feature blocks (222, 222a-222d) by stacking a selected set of the subsampled feature subsets feature subsets (212, 212a-212h) along a first dimension,
creating (230) a feature hyper-block (332) of the second shape by stacking the plurality of feature blocks (222, 222a-222d) along a second dimension,

a neural network processor (300, D1) configured to process the feature hyper block (332) to obtain a first result (380); and
an output post-processor (P2, 700) configured to post-process the result (380) to construct an output information signal (40) and/or to output a classification result.

## Description

The application regards information signal processing and, specifically, information signal processing using neural networks.

The application also regards, inter alia, channelwise feature reorientation and merging with neighbouring features for robust low complexity DNN based audio processing.

This document explains a method for designing a robust DNN based audio processing solution using proposed Channelwise Feature Reorientation (reshaping) and Merging with Neighbouring Features with computational complexity and memory low enough to run on DSPs.

### Background

Deep learning (DL) based solutions for different problems in the field of audio processing have recently become common and shown improved performance over classical signal processing-based methods. However, one of the main issues with most of the developed methods is their complexity, both computational as well as memory, which makes them unsuitable for deployment on DSPs and even in some cases on different embedded devices which generally come with memory as well as computational constraints.

In this report, methods and techniques are presented for designing improved processing blocks for input and output preprocessing for robust low complexity deep neural network (DNN) based audio processing methods and techniques for both computational complexity and memory reduction. Also, the proposed methods though presented in the context of a DNN based noise reduction solution, are applicable for other DNN based solutions for problems in audio processing that require reconstruction/classification/synthesis of audio signal at the output, e.g., dereverberation, echo cancellation, speech/audio coding, audio scene analysis, and audio classification etc.

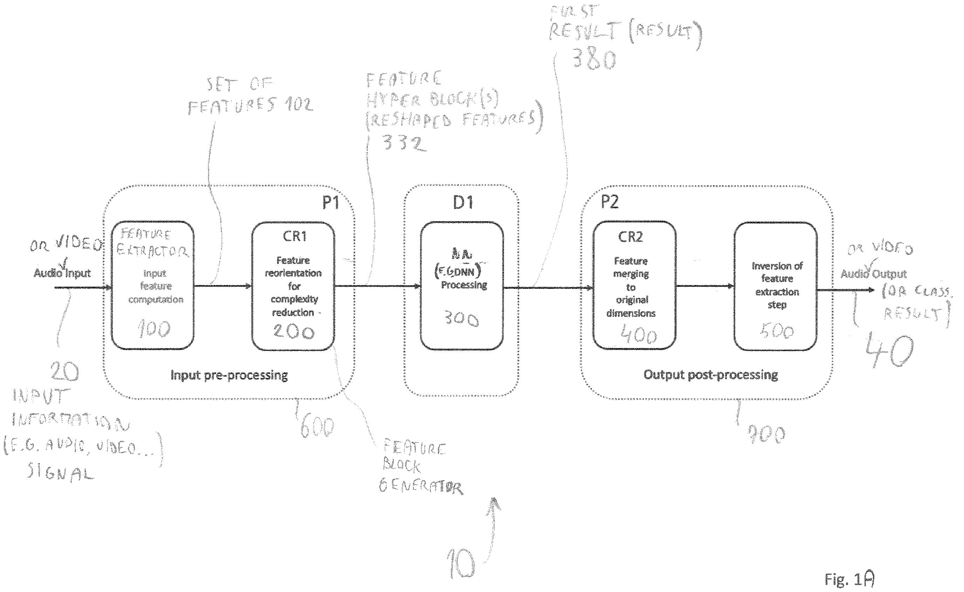

A processing pipeline for DNN based low complexity audio processing methods is shown in Fig. 1A. The input for such methods is generally an audio waveform which is also referred to as the time-domain audio signal. The first block in this pipeline is the input pre-processing block (Block P1). The feature extraction in this block can be either a deterministic time-frequency transform such as short-time Fourier transform (STFT) or be a set of features learnt via backpropagation for a specific application. Following the feature extraction step, a multi-dimensional (typically 2D or 3D) tensor is obtained which is then processed with feature reorientation block (CR1) before providing as an input to the main DNN processing block (block D1).

The block D1 is the main DNN processing block that operates on the provided input to perform the task for which it is designed. For example, in the case of mask-based noise reduction/speech enhancement, D1 can be a DNN mask estimator that estimates a mask to obtain an enhanced version of the feature representation of the audio input that only consists of the feature representation of the speech component and eliminates the non-speech components.

The output of D1 is then provided as input to the output post-processor (block P2). The P2 Block might be optional for some applications, e.g. classification tasks. The output post-processing block mainly consists of feature merging to original dimensions block and inversion of feature extraction step applied in P1 to obtain the final audio output. For example, taking the same application scenario of noise reduction/speech enhancement as above, the block P2 would consist of the masking operation where the estimated mask from D1 is first merged to original dimension and then applied to the original feature representation of the input signal to obtain the enhanced feature representation to which the final inversion operation is applied to obtain the output audio waveform.

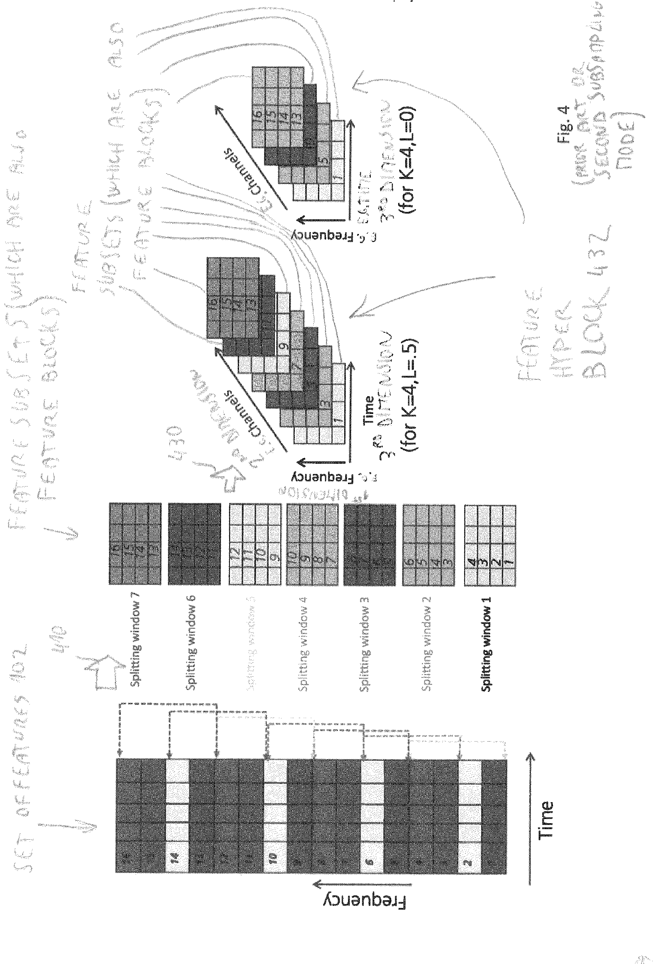

A visual representation of prior art channelwise subband splitting is shown in Fig. 4. We show two examples here. In the first example, we use subband length of K=4, overlap factor L=0.5, resulting in 7 uniform segments, which are then stacked along the channel dimension. In the second example, if we use K=4, L=0, we get 4 uniform segments, so after stacking in channel dimension, we get 4 channels.

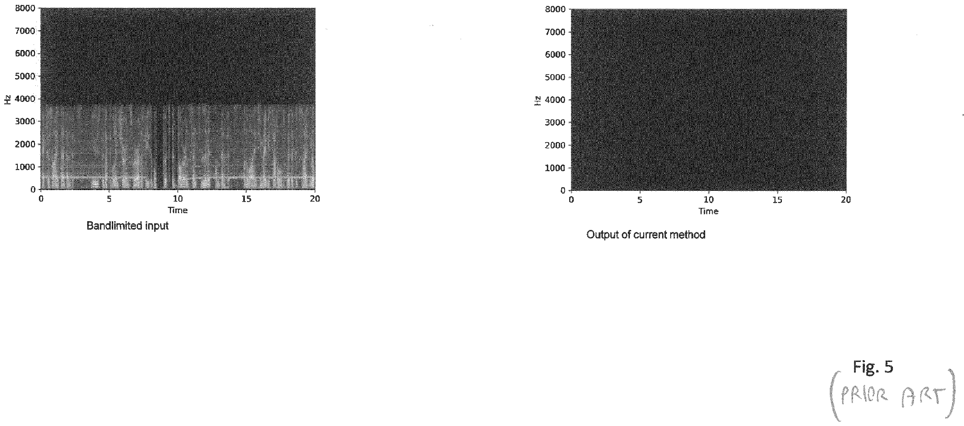

This approach has been successfully used for complexity reduction by decreasing the spatial (frequency) dimension of the input by assuming that the first part of D1 processing block consists of convolutional layers. However, there are some limitations of this approach:
- **Depthwise correlations:** This approach doesn't consider the depth wise correlation of the input features (i.e. the correlation of the input features along the second dimension, i.e. the channel dimension; "depth dimension" means the "channel dimension" or "second dimension"). For example, in Fig. 4, for the second example, where K=4 and L=0, the time frequency (TF) bins of the first channel (1, 2, 3, 4) and the second channel (5, 6, 7, 8) are not necessarily correlated in terms of their position in the depth/channel dimension. The closest TF bin to 1 in the depth dimension is 5. The distance between features in the depth dimension increase much more significantly when the spatial/frequency dimension of input features increases.
- **TF Feature correlations:** This approach also cannot make use of the correlation properties of the TF features for increasing the convolutional receptive field. In example shown in Fig. 4, if the first convolutional layer of D1 processing block is using a kernel size of 3 in the frequency dimension, the effective receptive field will be limited to 3, as the features in the depth dimension are not correlated.
- **Signal bandwidth:** The audio processing system is typically designed for a specific sampling rate with signals occupying the full spectral range possible. However, in practice, it is not possible to guarantee the full coverage of the spectrum. This is specifically true for commercial hardware where the sampling rate of the system matches the designed setting, but the system has low-pass components which limit the spectrum range to a subset of the frequencies (see Fig. 5). This poses a serious problem to DNN based processing, as the feature distribution of the example is very different from the features for which it is designed. This often leads to a complete suppression of the signal as illustrated in Fig. 5 or the signal is passed unaltered, both of which are undesired. Performance of our previous approach also suffers, if the input audio is bandpass filtered, i.e., referred to in the following, as the band limitation problem. As this splitting method is done in sequential order, some of the channels will totally be zeros. This results in an unpredictable behavior of the DNN model in D1 processing block.

In the previous (not yet published) patent applications PCT/EP2024/058155, PCT/EP2024/058156, and PCT/EP2024/058157, there are proposed channelwise subband splitting. An aim of this subband splitting is to split the features from feature extraction step into many uniform overlapping segments and each split segment is then arranged along a new dimension, referred to as the channel dimension to obtain the final input feature representation for the DNN processing.

### Summary

In accordance to an aspect, there is provided an apparatus for processing an input information signal, comprising:
a feature extractor for extracting a set of features from the input information signal, the set of features having a first shape,
a feature block generator configured to reshape the set of features from a first shape to a second shape by:
   segmenting the set of features into at least 3 feature subsets, each feature subset having a specific shape,
   performing a subsampling of the feature subsets to generate a plurality of feature blocks by stacking a selected set of the subsampled feature subsets feature subsets along a first dimension,
   creating a feature hyper-block of the second shape by stacking the plurality of feature blocks along a second dimension,
a neural network processor configured to process the feature hyper block to obtain a first result; and
an output post-processor configured to post-process the result to construct an output information signal and/or to output a classification result.

In accordance to an aspect, there is provided an apparatus for processing an input information signal, comprising:
a feature extractor for extracting a set of features from the input information signal, the set of features having a first dimension;
a feature block generator configured, in at least one first, subsampling mode, to reshape the set of features from a first shape to a second shape by:
   segmenting the set of features into at least 3 feature subsets, each feature subset having features along at least one first dimension;
   performing multiple subset-wise subsamplings on the feature subsets and, from each subsampling, generating a feature block by stacking, along the first dimension, the subsampled feature subsets onto the same feature block; and
   stacking the feature blocks along a second dimension thereby deriving a feature hyper block which is in the second shape, and
a neural network, NN, processor configured to process the feature hyper block to obtain a result; and
an output post-processor configured to post-process the result to construct an output information signal and/or to provide a classification on the input information signal.

In accordance to an aspect, there is provided a method for processing an input information signal, comprising:
extracting a set of features from the input information signal, the set of features having a first shape,
reshaping the set of features from a first shape to a second shape by:
   segmenting the set of features into at least 3 feature subsets, each feature subset having a specific shape,
   performing a subsampling of the feature subsets to generate a plurality of feature blocks by stacking a selected set of the subsampled feature subsets along a first dimension,
   create a feature hyper-block of the second shape by stacking the plurality of feature blocks along a second dimension,
through a neural network processing the feature hyper block to obtain a first result; and
to post-processing the result to construct an output information signal and/or outputting a classification result.

In accordance to an aspect, there is provided a method for processing an input information signal, comprising:
extracting a set of features from the input information signal, the set of features having a first dimension;
performing a feature block generation to reshape the set of features from a first shape to a second shape by:
   segmenting the set of features into at least 3 feature subsets, each feature subset having features along at least one first dimension;
   performing multiple subset-wise subsamplings on the feature subsets and, from each subsampling, generating a feature block by stacking, along the first dimension, the subsampled feature subsets onto the same feature block; and
   stacking the feature blocks along a second dimension thereby deriving a feature hyper block which is in the second shape, and
through a neural network, NN processing the feature hyper block to obtain a result; and
post-processing the result to construct an output information signal and/or to provide a classification on the input information signal.

In accordance to an aspect, there is provided a non-transitory storage unit storing instructions which, when executed by a processor, cause the processor to perform a method as above or below.

### Figures

Fig. 1A shows an implementation according to the present examples.
Fig. 1B shows an implementation according to prior art.
Figs. 2 and 3 show particulars of the implementation of Fig. 1A.
Fig. 4 shows operations and results in the prior art or according to a second subsampling mode in accordance with some of the present examples.
Fig. 5 shows results in prior art or operations.
Figs. 6 and 7 show operations according to the present examples.
Fig. 8 shows an implementation according to the present examples.
Figs. 9 and 10 show operations according to the present examples
Fig. 11 shows an implementation according to the present examples.
Fig. 12 shows an operation according to the present examples.
Fig. 13 shows an operation according to the present examples.

### Examples

Here below examples include pre-processing an input information signal (e.g. plurality of features) to be ingested onto at least one neural network (300, D1). The plurality of features may be, for example, a frequency domain representation of an input signal (e.g. audio or video or radar signal). It will be shown that at least one portion (e.g. at least in one first feature set of features 102 of the plurality of features) may be modified from a first shape (e.g. a shape in one or two dimensions, or anyway a shape that has only one channel) onto a second shape (e.g. a shape in one additional dimension, e.g. in two or three dimensions respectively). Subsequently, the output of the at least one neural network may be reshaped onto the original first shape or another shape corresponding to the original first shape.

Fig. 1A shows an example of an apparatus 10 for processing an audio input information signal 20. The audio input information signal 20 is here mostly referred to as an e.g. audio or video signal. However, the audio input information signal 20 could also be another kind of signal (e.g., radar signal). The apparatus 10 may process the input information signal 20 to obtain a processed version (output information signal) of the input information signal 20 (e.g., a masked version) and/or to output a classification result (e.g., by classifying the input information signal between a plurality of preferable discrete classification results).

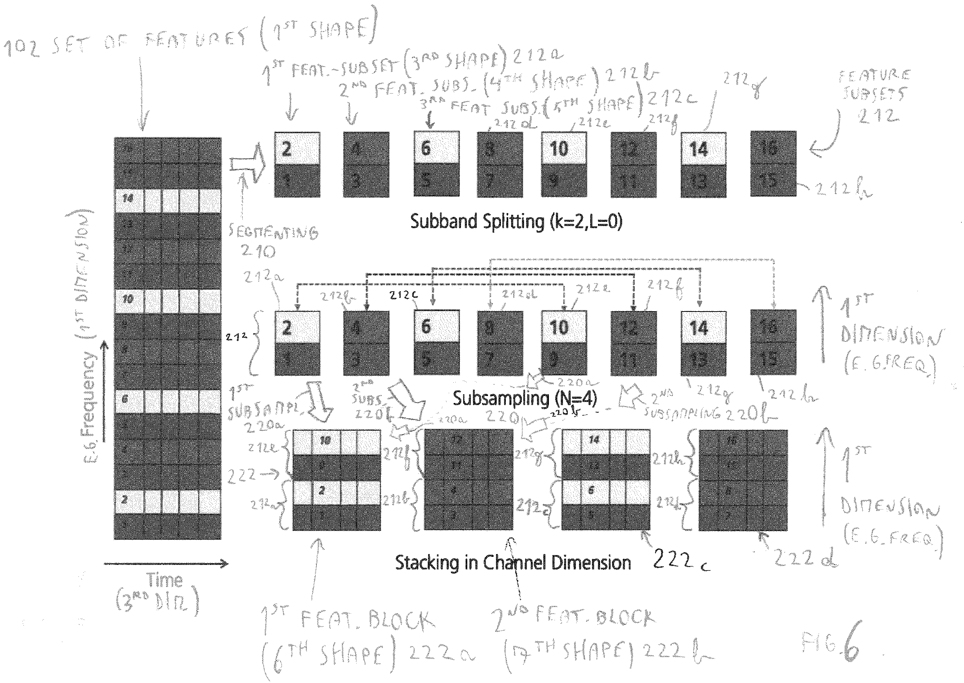

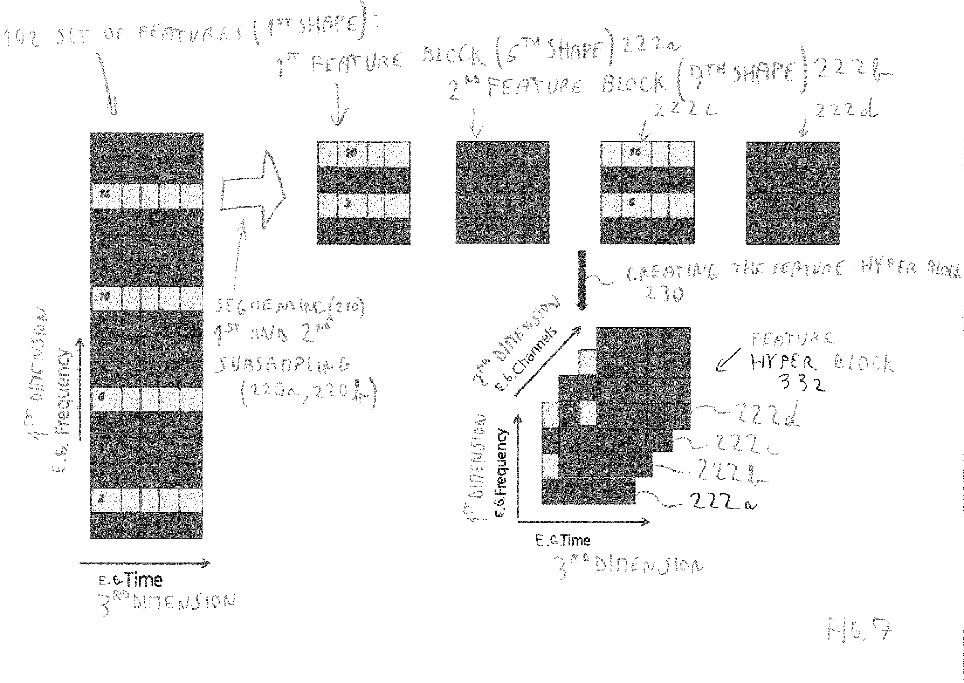

The apparatus 10 may include a feature extractor 100 (e.g., to perform input feature computation). The feature extractor 100 may convert the input information signal (e.g., audio or video input signal) 20 onto a set of features 102 (here below also referred to as first set of features 102). Examples of the set of features 102 are provided in Figs. 6 and 7. The set of features 102 may be developed, for example, according to a first dimension (e.g. frequency dimension). It is possible that the set of features 102 is also developed according to a third dimension (e.g., time), despite this third dimension being optional. In general terms, we may imagine that the set of features 102 is a result of a time-frequency conversion from a time domain (e.g., of the input signal 20) onto the frequency domain (e.g., in Fourier transform such as fast Fourier transform, FFT, short-time Fourier transform, STFT, wavelet transform, or the like) (the converter from time domain to frequency domain may be present in the apparatus 10 although not shown in the figures). The set of features 102 may therefore be developed in at least two dimensions (first (e.g. frequency) dimension and the third (e.g. time) dimension), but may have one single channel (i.e. the size of its channel dimension being 1). The set of features 102 may have a first shape. For example, in Fig. 6 the first shape involves 16 elements (features, entries, TF bins) in the frequency dimension (first dimension) and some elements along the third dimension.

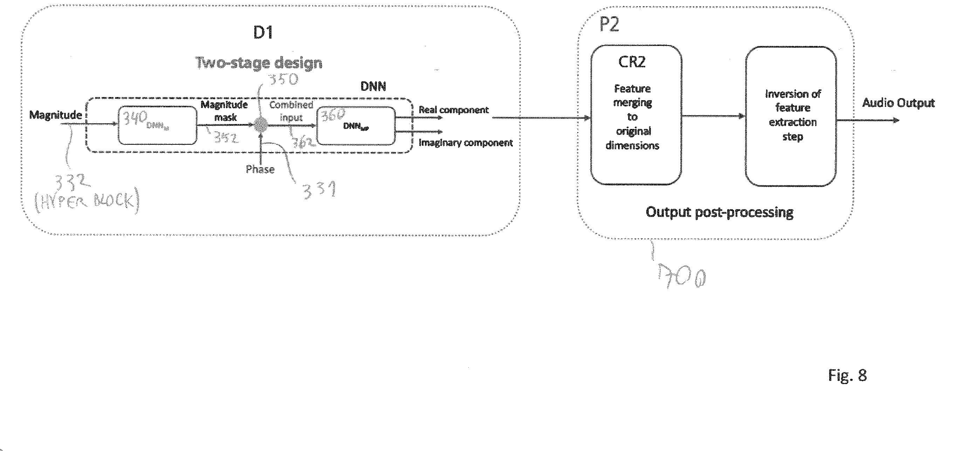

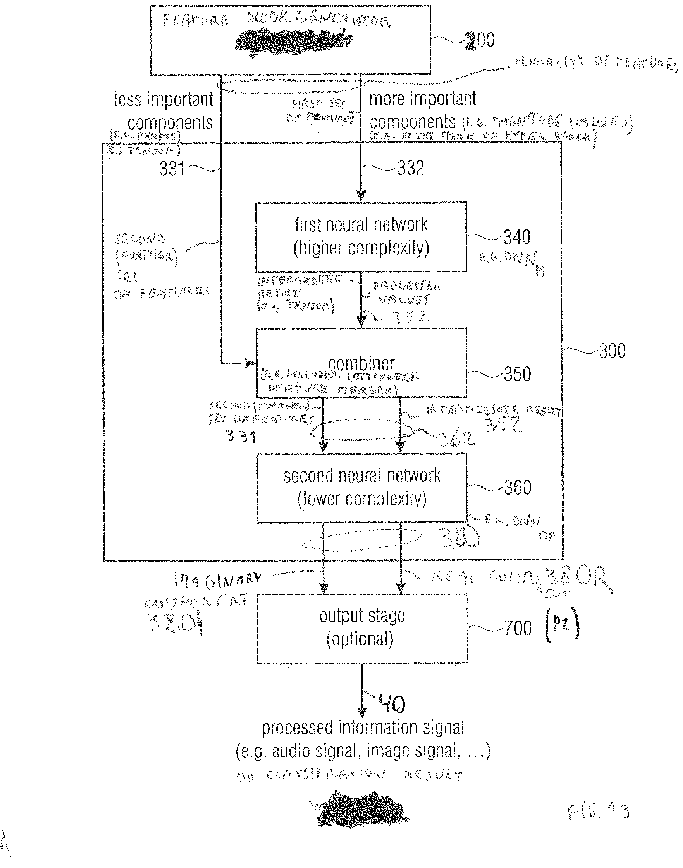

It will be shown that it is possible that the set of features 102 is obtained by separating some features from a plurality of features. For example, the first set of features 102 may include magnitude values, while phase values may be part of a second (further) set of features 331 (which is shown in Figs. 8 and 13) but which is disjoint from the set of features 102. The first set of features 102 and the second set of features may both be obtained in the conversion from time domain into frequency domain.

The apparatus 10 may include a feature block generator (of feature hyper block generator) 200 (CR1) which may reshape the set of features 102 from the first shape to a second shape (e.g. the second shape having one dimension more than the first shape). In some examples, the numerical value of each feature does not change: it is simply changed in its position. With reference to Figs. 6 and 7, the reshaping (also called "reorienting") may involve the following three main operations:
1. Segmenting (210) the set of features 102 into a plurality of feature subsets (splitting windows or segmenting windows). The feature subsets are referred to collectively with reference to number 212, and are indicated singularly with the symbols 212a, 212b, 212c, 212d, 212e, 212f, 212g, and 212h. The operation of segmenting may be understood as splitting the set of features in the first dimension. This operation may involve the ordering of the obtained feature subsets according to increasing positions in the first dimension. I.e.,
   a. The first feature may be formed by the first two features 1 and 2 (which may have the lowest frequencies) of the set of features 102 (entries, TF bins, etc.) along the first dimension;
   b. the second feature subset 212b may be formed by the subsequent features 3 and 4 along the first dimension;
   c. the third feature subset 212c may be formed by features 5 and 6 in the first dimension;
   d. the fourth feature subset 212d may be formed by the features 7 and 8 in the first dimension;
   e. the fifth feature subset 212e may include the features 9 and 10 in the first dimension;
   f. the sixth feature subset 212f is formed by the features 11 and 12 in the first dimension;
   g. the seventh feature subset 212g may be formed by the features 13 and 14 in the first dimension; and
   h. the eighth feature subset 212h may be formed by the features 15 and 16 of the set of features 102 in the first dimension.
   In examples, each feature subset may be an interval between two feature positions in the second dimension (depth dimension, channel dimension). When the first dimension is a frequency dimension, the last features (e.g., 15, 16) may be the highest harmonics, while one and two may be the lowest harmonics (one may be, for example the DC component). It will be shown that there is the possibility that some overlapping range is defined for different feature subsets, (e.g. when an overlapping value L, also called "overlapping factor", is provided which is 0≤L<1, with L=0 in case of non-overlapping, and L>0 in case of overlapping; the greater the overlapping range, the higher L; the smaller the overlapping range, the lower L). For example, in case of L=0.5, two consecutive subsets share one feature (e.g. the highest-frequency feature of the lower-frequency subset is also the lowest-frequency feature of the higher-frequency subset); etc. In Fig. 6 the subsamples are indicated without distinguishing between the features along the optional third dimension for avoiding complications.
2. Performing a subsampling 220 of the feature subsets 212 (212a-212h) to generate a plurality of feature blocks 222 (the feature blocks are indicated collectively with 222, but singularly Fig. 6 shows four feature blocks 222a, 222b, 222c, and 222d). In particular, the feature blocks 222 (222a, 222b, 222c, and 222d) may be generated by performing a stacking of the subsampled feature subsets (212a-212h), in particular by stacking the subsample feature subsets along a first dimension. As can be seen from Fig. 6, for example, from the first subsampling instantiation 220a, the fifth feature subset 212e is stacked on the first feature subset 212a along the first dimension to generate a single feature block 222a with four elements (entries, features, TF bins, etc.) in the first dimension. It may be seen in particular that the second feature 2 of the set of features 102 ends being adjacent to the ninth feature 9 in the first dimension. In addition, by virtue of the second subsampling instantiation 220b, the sixth feature subset 212f is stacked on the second feature subset 212b, thereby forming a second feature block 222b. Therefore, the original fourth feature 4 of the set of features 102 in the first dimension ends being adjacent with the eleventh element 11 in the first dimension. Analogously, a third feature block 222c is formed by stacking the seventh feature subset 212g onto the third feature subset 211c. A fourth feature block 222d is formed by stacking, in the first dimension, the eighth feature subset 212h onto the fourth feature subset 212d. The stacking instantiations may be understood as juxtaposing operations in the first dimension. In practice, through the feature segmenting 210 and the subsampling 220, the original sequence of the set of features is rearranged according to a different ordering.
3. At operation 230 (Fig. 7), it is possible to generate a feature hyper block 332 by stacking, along the second dimension (e.g., channel dimension), the feature blocks 222a-222d one over the other. For example, the fourth feature block 222d is stacked on the third feature block 222c, which in turn is stacked on the second feature block 222b, which in turn is stacked on the first feature block 222a. As can be seen from Fig. 7, the first feature 1 becomes adjacent to the third feature 3 in the second dimension. The third feature 3 is also adjacent to the fifth feature 5 in the second dimension. The fifth feature 5 is also adjacent to the seventh feature 7 in the second dimension. The stacking 230 in the second (e.g. channel) direction may be carried out by taking into consideration the ordering of the feature blocks. For example, the first feature block 222a may be identified by the lowest frequency (or the lowest ordered element along the first dimension); the second feature object 222b may also be identified as the second lowest feature block because its lowest frequency (or more in general the lowest position in the first dimension) is the third position; and so on. Accordingly, the order of the stacking according to the second dimension may be predetermined by the positions of the elements in the blocks (e.g., for each feature block 222a-222d, the element which is taken from the lowest position in the set of features 102 may determine the order of the feature block with respect to the other feature blocks; e.g. the first block 222a has the feature 1 which, in the set of features 102, has a lower position than feature 3 of block 222b, thereby determining, in the feature hyper block 332, that the feature block 222a has a lower position than the feature block 222b).

As shown in Fig. 1A, the reshaped feature hyper block 332 in the second shape may be inputted into a neural network 300 (or, more precisely, to a neural network processor 300 which operates a neural network). The output of the neural network will be a result (first result) 380. The neural network may therefore output the first result 380 (or result). An output post processor 700 (P2) may provide the output information signal for (e.g., audio or video) and/or provide the classification result.

As explained above (and with particular reference to Fig. 13), the first set of features 102 may be distinguished from a second set of features 331. The first set of features 102 may be in its reshaped version 332, for example, magnitude values, while other components (e.g., phase components) forming the second feature set 331 may be generated e.g. by the feature block generator 200 but may not be subjected to reshaping. The second set of features 331 may be shaped in the shape of a tensor (e.g., vectors), e.g. having a shape still corresponding to that of the first set of features 102. The first set of features 102 (in its reshaped version in the shape of hyper block 332) may therefore be inputted into a first neural network with higher complexity 340. The first neural networks 340 may be, for example, a fully connected network. The output of the first neural network (NN) 340 (which is also indicated with the DNN_{M}) because it is imagined as a neural network which copes with magnitudes. The output of the first NN 340 is indicated in Figs. 8 and 13 with the numeral 352, and is called intermediate result. The intermediate result 352 may provide a magnitude mask in the examples in which the first NN 340 is trained to perform a masking operation. The intermediate result 352 outputted by the first NN with higher complexity 340 may be provided to a combiner 350. The combiner 350 may provide a combined version 353 (362) of the processed values 352 (intermediate result), in combination with the second set of features 331, to a second neural network 360 with lower complexity. The second neural network 360 may be indicated with DNN_{MP} because it is imagined to process both phases and magnitudes. The output of the second neural network 360 may be provided as 380 having a real component 380R and an imaginary component 3801. Subsequently, the output 380 (which is also indicated with 380, to indicate the result of the neural network processed by the neural network processor 300) may be provided to the block 700 (e.g., P2). At the block 700, it is possible to reconvert the result 380 onto a time domain version of it.

(It is not necessary that two NNs are used. It could be possible to make use of one NN only, or more than two NNs, according to the specific necessity. However, it has been understood, e.g. in the case of a masking processing, that the first NN 340 may be used uniquely for processing magnitudes (small size of the input, but the first NN 340 having great complexity), and the second NN 360 may be used for considering also the phases (thus, larger size of the input, but the second NN 360 having less complexity). Accordingly, a good trade-off between quality and saving of computation power is achieved.)

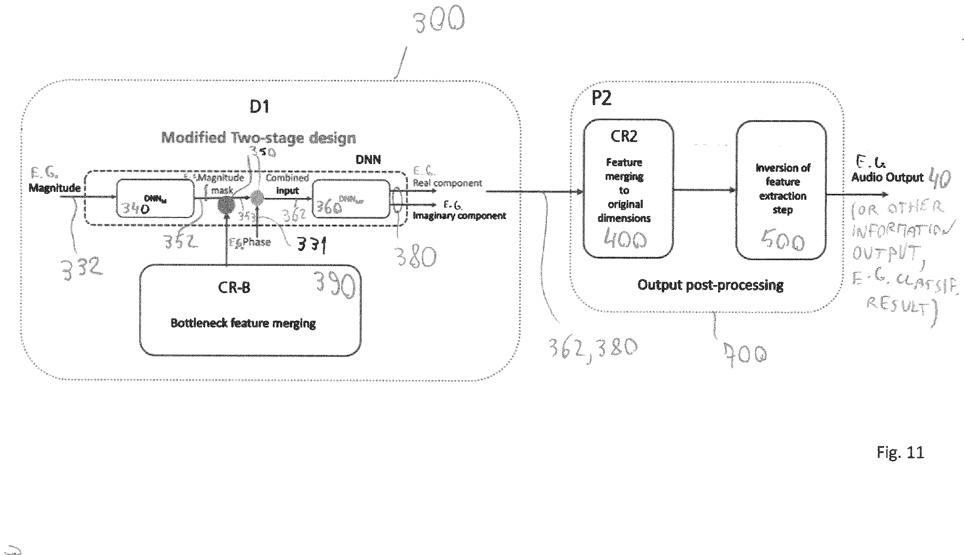

In examples, the NN processor 300 (D1) may provide the result 380 in a particular shape which corresponds to the first shape of the set of features 102. This result 380 may be obtained through further reshaping, e.g. to reshape the output of at least one NN (e.g. 300 or 340) in a final shape (which could be the same of the first shape) that has relationship with the first shape of the set of features 102. This operation can be particular important e.g. in the case of the use of the two NNs (Figs. 11 and 13), because the second set of features 331 (e.g. phases) is to be associated (e.g. in a feature-by-feature fashion) with the first set of features 102. For this reason, it is possible to reshape the result 380 (or an intermediate version 352 of the result 380) so that the result has the final shape compliant with the first shape (e.g. the final shape could be the same of the first shape). In this way, the shape of the second set of features 331 may comply with the shape of the first set of features 102, or in any case the output 40 of the apparatus 10 may have a shape complying (or at least having a relationship) with the original first shape of the set of features 102.

Now, reference is made to the optional techniques for reshaping the output (intermediate result) of the first NN 340 (to provide an input to the second NN 360 which is compliant with the second set of features 331, e.g. phases, which has bypassed the first NN 340) and/or for reshaping the output 380 of the NN processor 300 (to provide the output 40 which has positional relationships with the input signal 20).

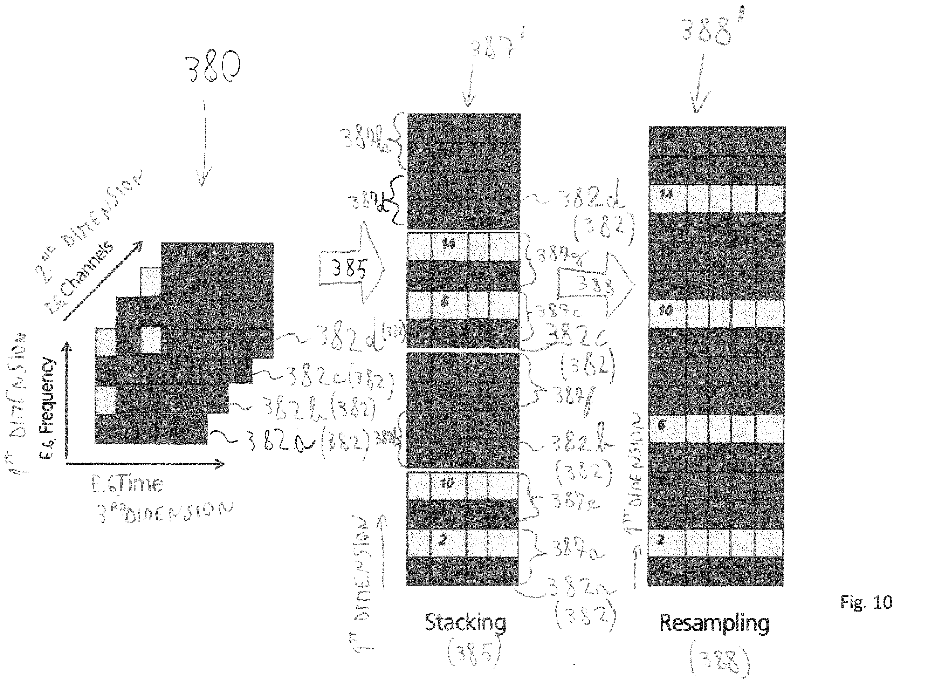

Let's take at first an example in which the NN 300 is a single stage NN (i.e. there is not the second neural network 360, DNN_{MP}) and there is no overlapping between the features in the feature segments 212 (i.e. L=0). In this case (e.g. at 400), it is possible to stack the features and then resample them. Fig. 10 shows an example with:
1) The result 380 may be in a shape which is the hyper block shape (second shape), or at least corresponds to the hyper block shape. The result 380 is a tensor (e.g. a 3D tensor) where, at each channel (i.e. along the second dimension), a result block 382 (382a, 382b, 382c, 382d) is present, and each element (entry, TF bin, feature) of the result block may extend along at least the first dimension, in correspondence with an element (entry, TF bin, feature) of the feature hyper block 332.
2) Then, a stacking 385 may be performed, e.g. by stacking the result blocks 382 (382a, 382b, 382c, 382d) in the first dimension (e.g. frequency dimension) to obtain a plurality of result segments 387 to obtain a result version 387' to be resampled. At this point, the second dimension may result depleted (i.e. number of dimensions being reduced by one dimension, e.g. from two dimensions to one dimension, or from three dimensions to two dimensions)
3) Then, a resampling 388 may be performed, to rearrange the result elements at their original position, thereby obtaining a resampled result 388'. In particular, result segments 387 (387a, 387b, 387c, 387c, 387e, 387f, 387g, 387h) may be identified (within each block 382a, 382b, 382c, 382d) in positions corresponding to the positions of the feature segments 212 (212a, 212b, 212c, 212c, 212e, 212f, 212g, 212h). For example, the result segment 387a (corresponding to the lowest-position feature segment 212a of Fig. 8) may be extracted from the first result block 382a and placed in the lowest position of the resampled result 388'. The same applies to all the other result segments, each of which may have a correspondence with at least one of the feature segments of Fig. 6.

Let's take a second example, in which the NN 300 is a single stage NN (i.e. there is not the second neural network 360, DNN_{MP}), and there is overlapping between at least some features in the feature segments 212 (L>0). Accordingly, in at least one dimension (e.g., second dimension, such as channel dimension) the second shape of the hyper block result 380 may result larger than the first shape of the set of features 102. In this case (e.g. at 400), it is possible to first stack the result features of the result 380 (e.g., like in 388 of Fig. 10), then to apply pooling or downsampling (or otherwise merging). Basically, the example of Fig. 10 would be carried out, but (e.g. in the case of L>0) with the variant that the result segments 387 (387a, 387b, 387c, 387c, 387e, 387f, 387g, 387h) overlap with each other and, when inserted in the result version 387' has a shape, along the first dimension (e.g. frequency dimension), larger than the set of features 102. Subsequently, pooling (or otherwise merging, e.g. by averaging the values of two result features (TF bins) corresponding to the same feature of the set of features 102) may be performed.

Let's take another example, in which the NN 300 is a single stage NN (i.e. there is not the second neural network 360, DNN_{MP}) but, in at least one dimension (e.g., second dimension, such as channel dimension) the second shape of the hyper block result 380 results smaller than the first shape of the set of features 102. In this case (e.g. at 400 ), it is possible to first stack the result features of the result 380 (e.g., like in 388 of Fig. 10), then to apply upsampling (or otherwise merging). Basically, the example of Fig. 10 would be carried out, but with the variant that the result version 387' has a shape, along the first dimension (e.g. frequency dimension), smaller than the set of features 102. Subsequently, upsampling (e.g. by interpolating adjacent values of two result features (TF bins) to obtain a new result feature corresponding to a particular feature of the set of features 102) may be performed.

Let's take another example, in which at least two NNs (e.g., 340 and 360 in Fig. 11 and 13) are used, and, besides the first set of features 102 to be inputted in the first NN 340 (e.g. higher complexity NN), also a second set of features 331 shall be inputted in the second NN 360 (e.g. lower complexity NN) together with the intermediate result 352 in a hyper block of second shape. Here, the features of the second set of features 331 shall have a positional relationship with corresponding features of the first set of features 102, to permit the second NN 360 to perform the processing taking into account the features of the first set of features 102 (in the second shape, i.e. in the shape of the hyper block 332) and the corresponding features of the second set of features 331. It is reminded that in some examples the second set of features 331 may be phase values to be associated with corresponding magnitude values (the magnitude values may be in the hyper block of second shape of the intermediate result 352).

In particular, it is possible (e.g. in the NN processor 300, D1) to rearrange the intermediate result 352 to comply with the first shape of the original first set of features 102, thereby bringing the intermediate result 352 to a reshaped version or rearranged version 353 compliant with the shape of the second set of features 331. Fig. 11 shows the "bottleneck" feature merging block 390 which reshapes the intermediate result 352 onto the reshaped version or rearranged version 353 to have the shape complying with (e.g. the second shape of) the first set of features 102. Subsequently, the reshaped version or rearranged version 353 of the intermediate result 352 may be combined (e.g. at the combiner 350) with the second set of features 331 (e.g. phases), to obtain a combined version 362 of the intermediate result 352. It is the combined version 362 of the intermediate result 352 which may be inputted in the second (e.g. lower complexity) NN 360.

Let's take into consideration the situation in which the intermediate result 352 outputted by the first NN 340 has the same shape (i.e. same sizes of the dimensions or at least of one dimension) of the first shape of the first set of features 102 (e.g. L=0). For example, the intermediate result 352 could be a tensor (e.g. a matrix or a vector) with the shape corresponding to (e.g. the same shape of) the first shape of the first set of features 102, but with the positions of the features non-corresponding to the positions of the features in the first set of features 102. Therefore, the intermediate result 352 may be changed (e.g. by the NN processor 300) by changing the positions (e.g. in CR-B block 390 of Fig. 11, or at least under the control of CR-B block 390) of the result features towards positions of the corresponding features in the first set of features, so as to obtain a rearranged version 353 of the intermediate result 352. This process may be based on knowledge known a priori, for example (the rearranged version 353 is a particular case of the reshaped version 353 of the intermediate result 352). Once the rearranged version 353 of the intermediate result 352 is obtained, it is possible to combine the features of the rearranged version of the intermediate result 352 with the second set of features 331 to obtain the combined version 362 of the intermediate result, and to input the combined version 362 of the intermediate result into the second NN 360.

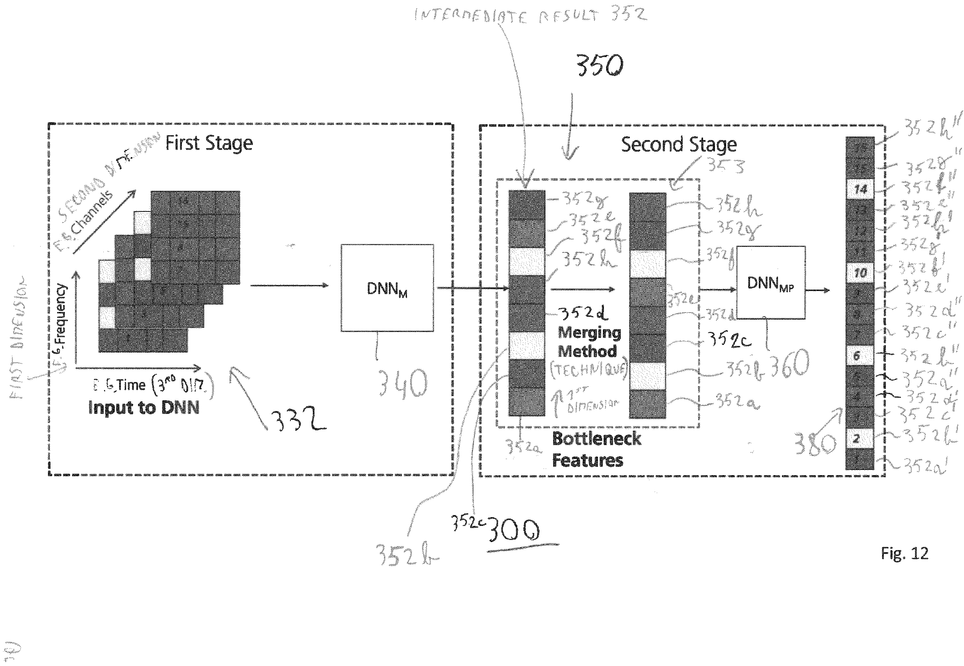

With reference to Fig. 12, let's now take into consideration the situation in which the intermediate result 352 outputted by the first NN 340 has a shape smaller than the first shape of the first set of features 102. Here, it is possible that the intermediate result 352 has a dimension size (e.g. in the first dimension e.g. frequency dimension) with size less than the size of the same dimension in the first set of features 102. For example in Fig. 12 we see that the intermediate result 352 is a tensor with eight features (e.g. TF bins) along the first dimension. In this case, for example, the intermediate result 352 has:
1) In the 1^{st} position of the intermediate result 352, the result feature 352a, associated with the 1^{st} position and 5^{th} position in the first set of features 102
2) In the 2^{nd} position of the intermediate result 352, the result feature 352c, associated with the 3^{rd} position and 7^{th} position in the first set of features 102
3) In the 3^{rd} position of the intermediate result 352, the result feature 352b, associated with the 2^{nd} position and 6^{th} position in the first set of features 102
4) In the 4^{th} position of the intermediate result 352, the result feature 352d, associated with the 4^{th} position and 8^{th} position in the first set of features 102
5) In the 5^{th} position of the intermediate result 352, the result feature 352h, associated with the 12^{th} position and 16^{th} position in the first set of features 102
6) In the 6^{th} position of the intermediate result 352, the result feature 352f, associated with the 10^{th} position and 14^{th} position in the first set of features 102
7) In the 7^{th} position of the intermediate result 352, the result feature 352e, associated with the 9^{th} position and 13^{th} position in the first set of features 102
8) In the 8^{th} position of the intermediate result 352, the result feature 352g, associated with the 11^{th} position and 15^{th} position in the first set of features 102.

Accordingly, it is possible to rearrange (reshape) the intermediate result 352 by reordering the result features 352a-352h onto positions corresponding to the positions in the first set of features 102, thereby obtaining 353. For example:
1) The result feature 352a is maintained in the first position
2) The result feature 352b is moved in the second position
3) The result feature 352c is moved in the third position
4) The result feature 352d is moved in the fourth position
5) The result feature 352e is moved in the fifth position
6) The result feature 352f is moved in the sixth position
7) The result feature 352g is moved in the seventh position
8) The result feature 352h is moved in the eighth position.

Notably, even if the size of the first dimension is 8 (while the original set of features 102 has a larger size of the first dimension, i.e. 16), there is still a correspondence between the result features 352a-352h in the rearranged version 353 of the intermediate result 352 and the features in the first set of features. Hence, the result features 352a-352h may be inputted into the second NN 360 e.g. in correspondence with the second set of features 331 (e.g. phase values), which is however not shown in Fig. 12. Hence, the second NN 360 may output the output value 380 in such a way that:
1) A 1^{st} position output value 352a' comes from the result feature 352a in the 1^{st} position of the tensor 352
2) A 2^{nd} position output value 352b' comes from the result feature 352b in the 2^{nd} position of the tensor 352
3) A 3^{rd} position output value 352c' comes from the result feature 352c in the 3^{rd} position of the tensor 352
4) A 4^{th} position output value 352d' comes from the result feature 352d in the 4^{th} position of the tensor 352
5) A 5^{th} position output value 352a" comes from the result feature 352a in the 1^{st} position of the tensor 352
6) A 6^{th} position output value 352b" comes from the result feature 352b in the 2^{nd} position of the tensor 352
7) A 7^{th} position output value 352c" comes from the result feature 352c in the 3^{rd} position of the tensor 352
8) An 8^{h} position output value 352c" comes from the result feature 352c in the 4^{th} position of the tensor 352
9) A 9^{th} position output value 352e' comes from the result feature 352e in the 5^{th} position of the tensor 352
10)A 10^{th} position output value 352f' comes from the result feature 352f in the 6^{th} position of the tensor 352
11)An 11^{th} position output value 352g' comes from the result feature 352g in the 7^{th} position of the tensor 352
12)A 12^{th} position output value 352h' comes from the result feature 352h in the 8^{th} position of the tensor 352
13)A 13^{th} position output value 352e" comes from the result feature 352e in the 5^{th} position of the tensor 352
14)A 14^{th} position output value 352f' comes from the result feature 352f in the 6^{th} position of the tensor 352
15)A 15^{th} position output value 352g" comes from the result feature 352g in the 7^{th} position of the tensor 352
16)A 16^{th} position output value 352h" comes from the result feature 352h in the 8^{th} position of the tensor 352.

It is to be noted that the choice between performing the rearranging of subsets into blocks (like in Figs. 6 and 7) and non-rearranging of subsets into blocks (like in Fig. 4) may be either pre-defined or based on signal analysis. Therefore, it is possible to define two different subsampling modes:
the first, subsampling mode (in which it performs like in Figs. 6 and 7, thereby reshaping onto the hyper block 332 using the sequence of segmenting 210, downsampling 32, and creating (230) the feature hyper block 332); and
the second, non-subsampling mode, wherein the feature block generator (CR1) operates like in Fig 4 (like in the prior art).

In particular, the feature block generator (or more in general the apparatus 10) may be configured to perform a selection between:
the first, subsampling mode (in which it performs like in Figs. 6 and 7, thereby reshaping onto the hyper block 332); and
the second, non-subsampling mode, wherein the feature block generator (CR1), in the second, non-subsampling mode, to (like in the prior art):
   split (410) the set of features into at least 2 feature subsets, each feature subset having [e.g. K, or at least K, with K>0 and in some cases preferably with K>1] features [e.g. time-frequency bins] in contiguous positions [e.g. in contiguous frequencies] [in some case, e.g. when L>0, some overlapping is possible, in such a way that each feature subset has at least one frequency bin of the immediately preceding or immediately subsequent feature subset], feature blocks being defined as feature subsets in the second, non-subsampling mode; and, without subsampling,
   staple (430) the feature blocks [which in this mode are the same as feature subsets] along the second dimension [e.g. channel dimension], thereby deriving a feature hyper block 432 [the feature hyper block may therefore be in two dimensions (e.g. frequency and channels or another combination), or in three dimensions (e.g.., frequency, channels, and time or another combination)],
   wherein the feature hyper block 432 is provided to the neural network processor both in a first, subsampling mode [e.g. a mode in which the features of the first or fifth aspect are performed], and in a second, non-subsampling mode.

It is possible to perform the selection between the first, subsampling mode and the second, non-subsampling mode, based on a resolution of the input information signal 20, so as to select the first, subsampling mode in case of comparatively high resolution [e.g. above a predetermined resolution threshold], and the second, non-subsampling mode in case of comparatively reduced resolution [e.g. below a predetermined resolution threshold].

In addition or alternatively, it is possible to perform the selection between the first, subsampling mode and the second, non-subsampling mode based on a sampling frequency of the input information signal, so as to select the second, non-subsampling mode in case of comparatively reduced sampling frequency [e.g. below a predetermined resolution threshold], and the first, subsampling mode in case of comparatively high sampling frequency [e.g. above a predetermined resolution threshold].

In addition or alternatively, it is possible to recognize whether the input information signal 20, or the set of features 102, has bands having values continuously 0 [e.g. magnitude 0] or having values lower than a predetermined threshold [e.g. in case the input information signal is subjected to a passband, lowpass, or high pass filter], so as to select:
the first, subsampling mode, in case of determination that the input information signal, or the set of features, has bands with values continuously 0 [e.g. magnitude 0] or values continuously lower than the predetermined threshold [e.g. to split the set of features in such a way that at least one feature subset has only frequencies in the bands with values continuously 0 or values continuously lower than the predetermined threshold, and at least one other feature subset has only frequencies in the bands have not values continuously 0 or which have not values continuously lower than the predetermined threshold, so as to subsequently have at least one feature block having both at least one feature subset with only frequencies in the bands with values continuously 0 or values continuously lower than the predetermined threshold and at least one feature subset with frequencies which are not in the bands with values continuously 0 or values continuously lower than the predetermined threshold],
the second, non-subsampling mode, in case of determination that the input information signal, or the set of features, has bands with values which are not continuously 0 [e.g. magnitude 0] or values not continuously lower than the predetermined threshold.

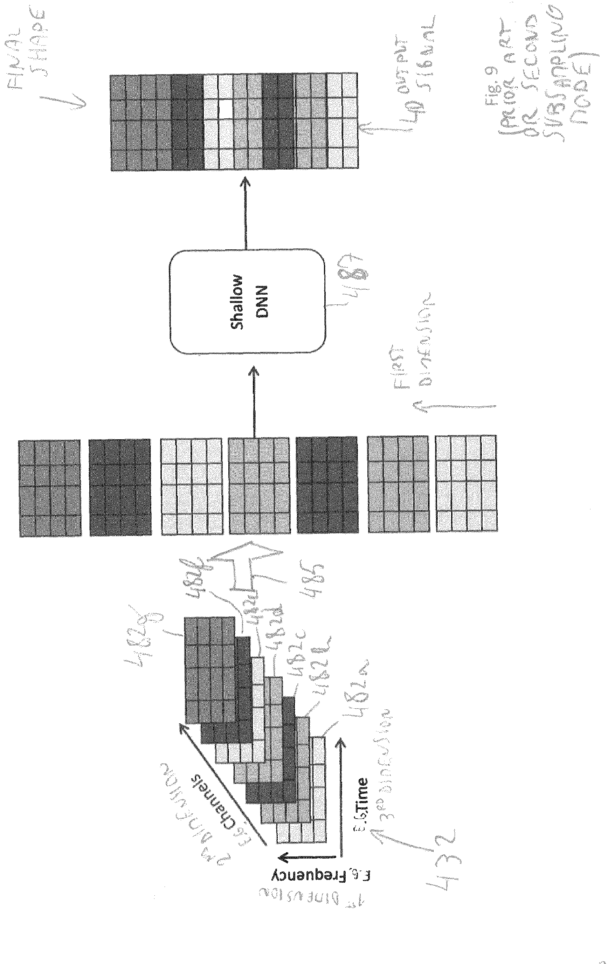

Where the second subsampling mode is selected (like in the prior art), downstream to the NN processor 300, the feature hyper block 432 may be reshaped through:
1) A reshaping 485 through by stapling the result blocks 482a, 482b, 482c, 482d, 482e, 482f, 482g, etc. one on the other along the first dimension (e.g. frequency dimension), thereby depleting the second dimension (i.e. channel dimension being 1), to obtain the output signal 40 e.g. through a shallow NN 487, without resampling (see Fig. 9).

Whether or not there is the selection between the conversion from the first shape onto the second shape using the resampling 220 (like in Figs. 7 and 8 in the first subsampling mode, and like in the prior art and like in Fig. 4 in the second subsampling mode) or not, it is possible to define the segmentation of the sets of features and/or the subsampling configuration based on the size of the set of features and/or the statistics of the input information signal 20.

### Discussion

Methods and techniques are presented for designing improved processing blocks for input and output preprocessing for robust low complexity deep neural network (DNN) based audio processing methods and techniques for both computational complexity and memory reduction. Also, the proposed methods though presented in the context of a DNN based noise reduction solution, they are applicable for other DNN based solutions for problems in audio processing that require reconstruction/classification/synthesis of audio signal at the output, e.g., dereverberation, echo cancellation, speech/audio coding, audio scene analysis, and audio classification etc.

A processing pipeline (implemented by apparatus 10) for DNN based low complexity audio processing methods is shown in Fig. 1A. The input 20 for such methods is generally (but not uniquely) an audio waveform which may be also referred to as the time-domain audio signal. The first block 600 in this pipeline is the input pre-processing block (Block P1). The feature extraction (100) in this block 600 can be e.g. either a deterministic time-frequency transform such as short-time Fourier transform (STFT) or be a set of features learnt via backpropagation for a specific application. Following the feature extraction step (100), a multi-dimensional (e.g. bidimensional, 2D, or three-dimensional, 3D) tensor may be obtained which is then processed with feature reorientation block (CR1, also called feature generator block 200) before providing as an input 332 to the main DNN processing block 300 (block D1).

The block D1 (neural network processor 300) may be the main DNN processing block that operates on the provided input (332 in the present examples) to perform the task for which it is designed. For example, in the case of mask-based noise reduction/speech enhancement, D1 (300) can be a DNN mask estimator that estimates a mask to obtain an enhanced version of the feature representation of the audio input that comprises (e.g. consists of) the feature representation of the speech component and eliminates the non-speech components.

The output 380 of D1 (NN processor 300) may then be provided as input to the output post-processor (block P2, 700). The P2 (700) Block might be optional for some applications, e.g. classification tasks, or may provide a classification result. The output post-processing block 700 (P2) may mainly comprise (e.g. consist of) feature merging to original dimensions (CR2, 400) block and inversion of feature extraction step applied in P1 to obtain the final audio output. For example, taking the same application scenario of noise reduction/speech enhancement as above, the block P2 (700) would comprise (e.g. consist of) the masking operation where the estimated mask from D1 is first merged to original dimension and then applied to the original feature representation of the input signal to obtain the enhanced feature representation to which the final inversion operation is applied to obtain the output audio waveform.

### Idea(s)

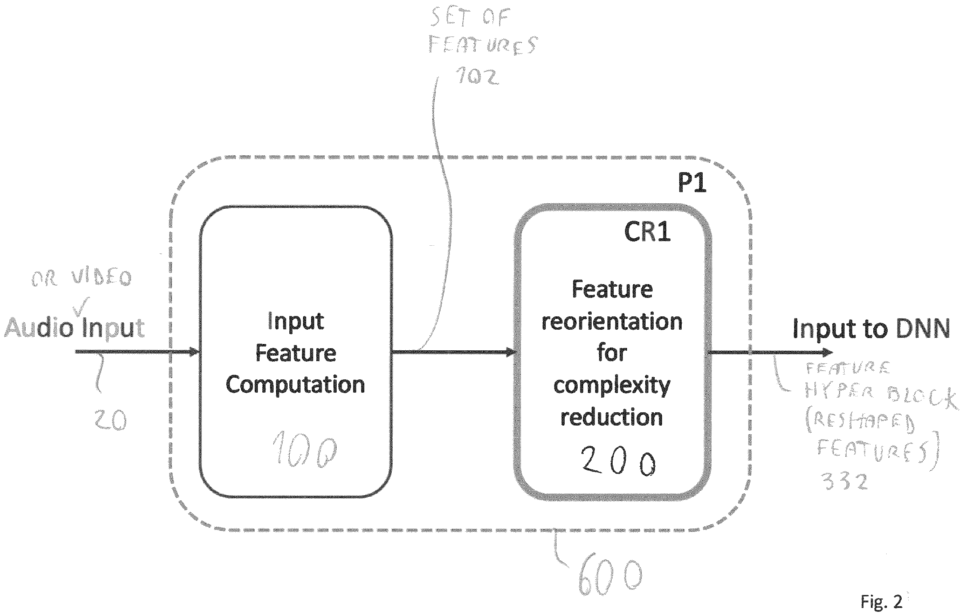

A main idea is to introduce a novel feature reorientation block (CR1, feature generator block 200, e.g. in Fig. 2) in P1 (600) after the feature computation step, which leads to the use of efficient hyper-parameter settings of the DNN model block (D1, 300) thus resulting in reduced computational complexity and increased robustness while maintaining performance.

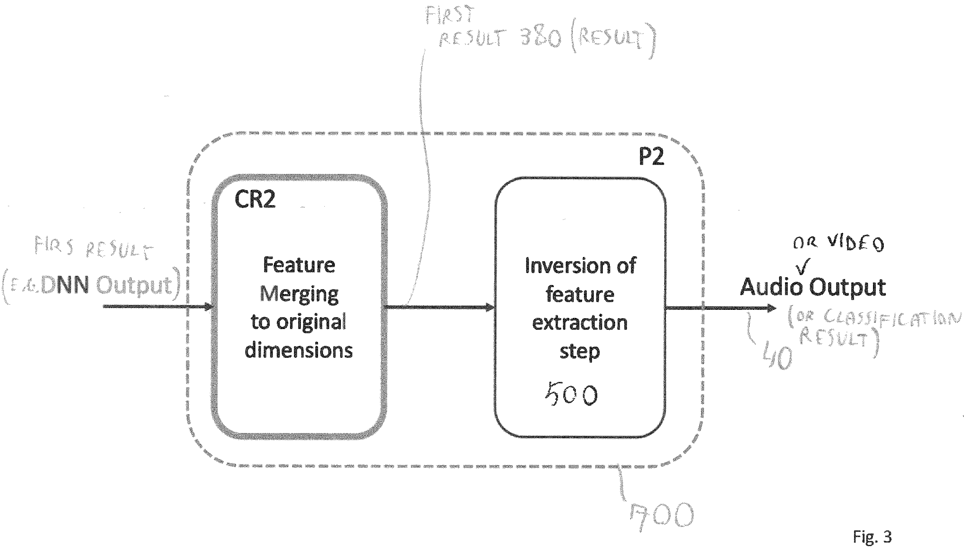

Following the processing of the input by the DNN model (D1, 300), the feature reorientation step may be reversed to restore the output of the of the DNN (D1, 300) to the original dimensions of the input features (CR2, 400, in Fig. 3) and finally the feature extraction step is inverted (500) to obtain the output audio waveform 4 (or other information signal and/or a classification result).

### Channelwise Features Reorientation with Neighboring Features

In this methods and techniques, we may use the combination of subband and subsampling method or techniques. To facilitate the idea, first we split the features of the set of features 102 from feature extraction step (at 100) into many (e.g. uniform) overlapping segments or non-overlapping segments indicated with 212 (212a-212-h) with subband length/neighboring features=K (with K>1) and overlapping factor L (where L>0 in case of overlapping segments and L=0 in case of non-overlapping segments), and then we subsample these feature segments (212, 212a-212-h) with a subsampling factor of N (with N>1). Finally, the subsampled feature blocks 222 (222a, 222b, 222c, 222d) are stacked along the channel dimension (or more in general, along a second dimension) to obtain the final input feature representation (also called hyper block 332) for the DNN processing block D1 (300).

A visual representation of the channelwise feature reorientation (shaping from a first shape to a second shape) with neighbouring features is shown in Fig. 6 and 7. In this example, we use subband length/neighbouring features of K=2 (with k being the number of features along the first dimension), overlap factor L=0 and subsample factor N=4, resulting in 4 uniform feature blocks 222 (222a, 222b, 222c, 222d), which are then stacked in the channel dimension (or more in general second dimension), to form the hyper block 332.

The proposed channelwise feature reorientation with neighbouring features is also much flexible and generalized, as it allows for processing features at different resolutions. For example, if the feature extraction step in block P1, 200 (Fig. 1A), computes highly resolved features (i.e. having high resolution), then using a higher K with a higher N results in efficient feature reorientation (reshaping) for the DNN processing in 300. However, if the features computed have a lower resolution, then smaller values for K and N are desired. Different choices for K and N will result in different dimensions of the input to the DNN processing block, which will have different computation and memory demands. Thus, the proposed approach facilitates variable complexity.

This proposed approach solves the prior art's problems described above:
- By using the proposed feature reorientation (reshaping) method and technique in CR1 block (200), we achieve better depthwise correlation between features in each of the channels. In Fig. 7, for N=4, K=2 and L=0, the time-frequency (TF) bins of the first block 222a (displaced in the first channel) (with TF bins 1, 2, 9, 10) and the second block 222b (displaced in the second channel) (with TF bins 5, 6, 13, 14) are now more correlated in terms of their position in the depth/channel dimension. The closest TF bin to 1 in the depth dimension is 3 (it is reminded that the "depth dimension" is the "second dimension", which may be the "channel dimension"). The distance between features in depth dimension will also not be affected, when the spatial/frequency dimension of input features increases.
- This approach also solves the band limitation problem. As this splitting method is not anymore in sequential order, so zeros arising from the band limitation problem will not be any more concentrated only in some channels, rather will be distributed across all channels. This results in more stable behavior from the DNN model in D1 processing block.
- This approach makes use of the TF feature's correlation properties for increasing convolutional receptive field. For our proposed method, if the first convolutional layer of D1 processing block is using kernel size of 3 in frequency dimension as before, the effective receptive filed will be now 3*N, as the features in depth dimension are assumed to be correlated now.

### Merging methods

The obtained outputs of DNN model of D1 processing block are not constrained to be of any specific dimensions. The spatial and channel dimensions of these outputs can be higher or lower than the inputs. So, we need to merge the features into original dimension. In Fig. 8, we can see the block diagram of the D1 block using a two stage DNN processing (we proposed it before for low complexity audio processing) followed by the P2 block, where the feature merging to original dimensions is performed in CR2 block .

In our previous documents, we proposed a simple stacking method for feature merging in CR2 block. In this method the channelwise features are stacked together, then a shallow network consisting of 1-2 fully connected layers are used to obtain the output in the original input dimensions. The merged output is then given as input to the feature inversion step. In Fig. 9, we can see the processing steps for existing feature merging method in CR2 block.

However, this existing feature merging approach is not necessarily suitable for newly proposed channelwise time frequency feature reorientation method and technique with neighboring features, as the existing method works under the assumption that input features to the DNN are in sequential order (see Fig. 4).

### Proposed Merging Methods

So, address the necessities arising from the existing method, we propose a new feature merging method in CR2 block (400), where our main aim is to reverse the feature reorientation technique applied in the CR1 block (200) and merge the feature to original dimension. In this technique, first the channelwise features are stacked together as previously, and then a resampling method is applied to get output features in desired sequential order. Finally, if the feature dimension is higher/lower than the desired dimension, a simple average pooling or upsampling method is applied. In the following Fig. 10, the processing steps of the proposed feature merging method is shown.

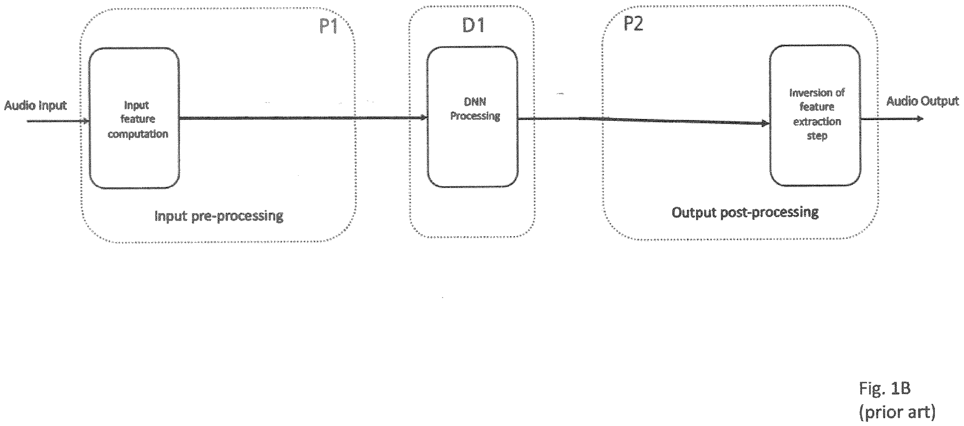

So far in this document, we have used the feature merging method in the CR2 block (200), which is always followed by the D1 (300) block (see Figs. 8 and 1). This flow diagram still holds valid, if we use a single stage DNN in the D1 (300) block. However, if we use the proposed feature reorientation in CR1 (200) block followed by two stage DNN processing in the D1 (300) block (as shown in Fig. 8), we may need to introduce a new feature merging block within the D1 (300) block. The reason for this is that the two-stage DNN processing framework operates on the assumption that the input features of the first stage is always in sequential order, so a low complexity DNN relative to the first stage can be used for the second stage. For e.g. if the second stage DNN_{MP} (360) is a convolutional neural network (CNN), then we need the features output from DNN_{M} (340) to be in correct order, so then it can be processed efficiently by DNN_{MP} (360). We call this new block as bottleneck feature merging method (CR-B block 390).

An example of the modified block diagram of bottleneck feature merging (CR-B block) 390 in combination of two stage DNN processing in D1 block (300) is shown in Figs. 11 and 12.

### Details of Feature Merging Methods (CR2 and CR-B block)

As mentioned already, depending on the single or two stage DNN processing used in D1 block (300), the processing of the CR-B (390) and CR2 (400) may be applied. Following different combination of feature merging is discussed:

### For Single Stage DNN in D1 block:

- If the outputs 380 of the D1 block (300) is of same dimension of the size of the input 20, and an overlap factor of L=0 is used in CR1 block (200), then corresponding feature merging method (technique) in CR2 block (400) should first stack all the features and then resample the features to get the desired order.
- If the outputs 380 of the D1 block (300) is of higher/lower dimension than the size of the input 20, and an overlap factor of L>0 is used in CR1 block (200), then corresponding feature merging method in CR2 block (200) should first stack all the features and then resample the features to get the desired order and finally apply simple average pooling/upsampling to get the desired output dimension.

### For Two Stage DNN in D1 block:

- If the outputs 380 of the D1 block (300) is of same dimension of the size of the input 20, and an overlap factor of L=0 is used in CR1 block (200), then corresponding feature merging method in CR-B block (390) should first stack all the features and then resample the features to get the desired order.
- If the outputs of the D1 block (300) is of higher/lower dimension than the size of the input, and an overlap factor of L>0 is used in CR1 block (200), then corresponding feature merging method in CR-B block (390) should first stack all the features and then resample the features to get the desired order and finally apply simple average pooling/upsampling to get the desired output dimension.

In case of two stage DNN in D1 block (300), the task of CR2 block (400) may be just stacking the output features and apply simple average pooling/upsampling to get the desired output dimension.

The processing steps mentioned in CR1 (200), CR-B (390) and CR2 (400) can also be achieved through some appropriately configured learnable/non-learnable algorithms, e.g. DNN learning algorithms/ mapping based algorithms.

### Summarizing: important aspects of preset examples are

▪ Receive at least one audio signal (or more in general information signal) 20.
▪ Optionally, convert the audio signal to obtain a first set of feature representations, e.g., time-frequency features (e.g. in the set of features 102).
▪ Perform feature reorientation (reshaping) on the first set of feature representations (set of features) 102 or the audio signal (or more in general information signal) 20 to obtain a second set of feature representations, by channelwise frequency/sample/feature reorientation (reshaping) e.g. with their neighbors, to obtain a feature hyper block 332.
▪ Process the second set of feature representations (feature hyper block 332) by at least one DNN processor 300 to obtain at least one DNN output (result 380), where each DNN processor could comprise (e.g. consist of) multi/single-stage DNN processing (e.g. at 340, 360 etc.), optionally with bottleneck feature merging (e.g. controlled by 390) (merging can be, for example, reshuffling, changing positions etc.).
▪ If bottleneck feature merging (390) is not done, then perform feature merging on the DNN outputs (380) to obtain a third set of feature representations by channel-wise frequency/sample/feature merging with their neighbours.
▪ If bottleneck feature merging (390) is done, then perform feature merging on the DNN outputs to obtain a third set of feature representations by channel-wise frequency/sample/feature stacking.
▪ Optionally convert the third set of feature representations into an audio signal.
▪ For some applications, e.g., classification tasks, feature merging block P2 may be optional.

### Summarizing aspects

According to a first aspect, there is provided an apparatus (e.g. 1) for processing an input information signal (e.g. 20) [e.g. audio signal, video signal, radar signal, etc.], comprising:
a feature extractor (e.g. 100) for extracting a set of features (e.g. 102) from the input information signal (e.g. 20), the set of features (e.g. 102) having a first shape [e.g. the set of features may be a first set of features, e.g. different from (e.g. disjoint from) a further (e.g. second) set of features; when joined together, the first and second sets form a so-called "plurality of features"],
a feature block generator (e.g. 200, CR1) configured [e.g. in at least one first subsampling mode] to reshape the set of features (e.g. 102) from a first shape to a second shape by:
   segmenting [e.g. splitting] (e.g. 210) the set of features (e.g. 102) into at least 3 feature subsets (e.g. 212, 212a-212h), [e.g., a first, a second and third feature subset], each feature subset (e.g. 212, 212a-212h) having a specific shape [e.g. the first feature subset having a third shape and the second feature subset having a fourth shape and the third feature subset having a fifth shape, etc.] [e.g. the shapes of the first, second, third, etc. feature subsets may be equal with each other or may be different from each (e.g. in at least one dimension) other according to the particular example],
   performing a subsampling (e.g. 220, 220a, 220b) of the feature subsets (e.g. 212) to generate a plurality of feature blocks (e.g. 222, 222a-222d) by stacking a selected set of the subsampled feature subsets feature subsets (e.g. 212, 212a-212h) along a first dimension [e.g. a first feature block of a sixth shape by stacking the first subsampled feature subsets along a first dimension][e.g. the first dimension may be a frequency dimension], [e.g. performing a second subsampling of the feature subsets to generate a second feature block of a seventh shape by stacking the second subsampled feature subsets along a first dimension],
   creating (e.g. 230) a feature hyper-block (e.g. 332) of the second shape by stacking the plurality of feature blocks (e.g. 222, 222a-222d) along a second dimension [e.g. the second dimension may be a channel dimension],
a neural network processor (e.g. 300, D1) [e.g. a second, further, set of features (e.g. phase values), different (e.g. disjoint) from the first set of features) may also be provided to the neural network processor; in examples, the feature hyper block (e.g., containing information on the magnitude values, but possibly not on phase values) may be provided to a first NN (e.g., DNN), while the output of DNN may be provided, together with the second (e.g. further) set of features (e.g., phase values) to the second NN (e.g., convolutional NN); the output of the neural network processor may be a set of values which may include complex values, each with real component and imaginary component] configured to process the feature hyper block (e.g. 332) to obtain a first result (e.g. 380); and
an output post-processor (e.g. P2, 700) configured to post-process the result (e.g. 380) to construct an output information signal (e.g. 40) and/or to output a classification result [e.g. on the input signal].

According to a second aspect when referring back to the first aspect, each of the feature subsets (e.g. 212, 212a-212h) is smaller [e.g. in each dimension] than the first shape [e.g. the third, fourth and fifth shapes of the first, second and third feature subsets, respectively, are smaller than the first shape of the extracted set of features from the input information signal],

According to a third aspect when referring back to any of the preceding aspects, the feature subsets (e.g. 212, 212a-212h) have an overlapping range with each other [e.g. the first feature subset and the second feature subset may have an overlapping range] [e.g. so that one or more features of at least one feature subset are in multiple feature subsets] [e.g. the set of features are in the first feature subset and in the second feature subset, and the second feature subset and the third feature subset may have an overlapping range, so that one or more features of the set of features are in the second feature subset and in the third feature subset].

According to a fourth when referring back to any of the preceding aspects, the segmentation of the sets of features and/or the subsampling is configured based on the size of the set of features [e.g. if the size of the set of features is small a higher segmentation and subsampling can be used] and/or the statistics of the input information signal.

According to a fifth aspect, there is provided an apparatus (e.g. 1) for processing an input information signal (e.g. 20) [e.g. audio signal, video signal, radar signal, etc.][e.g. it may be the apparatus of any of the preceding aspects], comprising:
a feature extractor (e.g. 100) for extracting a set of features (e.g. 102) from the input information signal, the set of features having a first dimension [e.g. the set of features may be a first set of features (e.g. magnitude values), while a further (e.g. second) set of features may be phase values, not provided to the feature block generator; together, the first and second sets of features for the so-called "plurality of features"][e.g. the first dimension may be a frequency dimension];
a feature block generator (e.g. 100, CR1) configured, in at least one first, subsampling mode, to reshape the set of features (e.g. 102) from a first shape to a second shape by:
   segmenting [e.g. splitting] (e.g. 210) the set of features (e.g. 102) into at least 3 feature subsets (e.g. 212, 212a-212h), each feature subset (e.g. 212, 212a-212h) having [e.g. K, or at least K, with K>0 and in some cases preferably with K>1] features along at least one first dimension [e.g. bins e.g. time-frequency bins of contiguous frequencies] [e.g. in some case, e.g. when L>0, some overlapping is possible, in such a way that each feature subset has at least one frequency bin of the immediately preceding or immediately subsequent feature subset] [e.g. a step of ordering the at least 3 feature subsets according to their frequencies is possible, but it is also possible that the splitting is performed so as to obtain the feature subsets being already ordered];
   performing multiple subset-wise subsamplings (e.g. 220a, 220b) on the feature subsets (e.g. 212, 212a-212h) [e.g. according to a subsampling factor N] [e.g. the feature subsets being ordered according to their frequencies] and, from each subsampling (e.g. 220a, 220b), generating a feature block (e.g. 222, 222a-222d) by stacking [e.g. juxtaposing], along the first dimension [e.g. a frequency dimension], the subsampled feature subsets (e.g. 212, 212a-212h) onto the same feature block (e.g. 222, 222a-222d); and
   stacking [e.g. juxtaposing] (e.g. 230) the feature blocks (e.g. 222, 222a-222d) along a second dimension [e.g. channel dimension] thereby deriving a feature hyper block (e.g. 332) which is in the second shape, and
a neural network, NN, processor (e.g. 300, D1) [e.g. embodying a DNN or a convolutional NN, but in some examples it may embody a DNN (e.g. a fully connected NN) followed by a convolutional NN] configured to process the feature hyper block (e.g. 332) to obtain a result (e.g. 380) [e.g. a second set of features (e.g. phase values) may also be provided to the neural network processor; in examples, the feature hyper block (e.g., containing information on the magnitude values, but possibly not on phase values) may be provided to a first NN (e.g., DNN), while the output of DNN may be provided, together with the second set of features (e.g., phase values) to the second NN (e.g., convolutional NN); the output of the neural network processor may be a set of values which may include complex values, each with real component and imaginary component, and may be a tensor (e.g. a vector)]; and
an output post-processor (e.g. 500, P2) configured to post-process the result (e.g. 380) to construct an output information signal (e.g. 40) [e.g. which may be, for example, a processed version (e.g. a masked version) of the input information signal] and/or to provide a classification on the input information signal [e.g. the output post-processor (e.g. 500) may be configured to receive and process the result, so as to provide a classification (e.g. as an output) between at least one first classification result, indicative of a first classification result of the input information signal, and at least one second classification result, indicative of a first classification result of the input information signal; for example, the NN processor may output one or more probability(ies) obtained by processing the input information signal, and the output post-processor may for example apply threshold(s) to the probability(ies), so as to provide a classification from the comparison between the threshold(s) and the probability(ies)][e.g. therefore, the apparatus operates as a classifier that classifies the input information signal].

According to a sixth aspect when referring back to any of the preceding aspects, the apparatus may be configured to receive an overlapping parameter [e.g. L] indicating how many features are shared between each subset and the immediately contiguous subset.

According to a seventh aspect when referring back to any of the preceding aspects, the neural network processor (e.g. 300, D1) is configured to subject the feature hyper block (e.g. 332) to a first neural network (e.g. 340) [e.g. a DNN, e.g. a fully connected NN], to thereby derive an intermediate result (e.g. 352) [e.g. outputted by the DNN_{M} in Figs. 10 and 13, embodied for example by the "magnitude mask" before the application for the bottleneck features merging], and to provide the intermediate result (e.g. 352) to a second neural network (e.g. 360) [e.g. a convolutional neural network] [e.g. together with the second set of features (e.g. phase values)], the second neural network (e.g. 360) being less complex than the first neural network (e.g. 340).

According to an eighth aspect when referring back to the seventh aspect, the first neural network (e.g. 340) [e.g. DNN, e.g. fully connected NN], outputs the intermediate result (e.g. 352) as a tensor [e.g. matrix, e.g. vector], in such a way that each element [e.g. entry] of the tensor is associated with a position in the set of features (e.g. 102) [e.g. the original set of features of the input information signal], wherein the neural network processor (e.g. 300, D1) is configured to rearrange the tensor (e.g. 352) according to the positions in the [original] set of features (e.g. 102), in association with features of a second, further set of features (e.g. 331) (e.g. phase values), where the rearranged tensor (e.g. 353) and the features of the further set of features (e.g. 331) are inputted to the second neural network (e.g. 360).

According to an aspect when referring back to any of the preceding aspects, the neural network processor (e.g. 300, D1) is configured to provide the intermediate result in a shape, each position of which corresponds to at least one position in the first shape of the set of features, wherein the apparatus is configured to reshape the intermediate result [e.g. tensor] according to the first shape of the set of features [so as it conforms to the first shape].

According to a tenth aspect when referring back to any of the preceding aspects, the neural network processor may be configured to provide the intermediate result (e.g. 352) [e.g. as a vector] having a smaller or larger shape [e.g. in at least one dimension and/or in the total number of entries] than the set of features (e.g. 102) in the first shape, wherein each position of the intermediate result (e.g. 352) corresponds to multiple positions of the first shape of the set of features (e.g. 102) or multiple positions of the intermediate result (e.g. 352) correspond to single positions of the first shape of the set of features (e.g. 102), wherein the apparatus is configured to resample and/or reshape the result to conform with the set of features in the first shape.

According to an eleventh aspect when referring back to any of the preceding aspects, the neural network processor (e.g. 300, D1) provides the result in a shape, each position of which corresponds to at least one position in the first shape of the set of features, wherein the apparatus is configured to reshape the result [e.g. tensor] according to the first shape of the set of features [so as it conforms to the first shape].

According to a twelfth aspect when referring back to any of the preceding aspects, the set of features (e.g. 102) is a first set of features which are magnitude values, and a second set of features (e.g. 331) are phase values [e.g. the magnitude values are in general more important and are therefore preferably ingested in the higher-complexity neural network (e.g. 340), while the phase values are less important and are ingested in the less complex neural network (e.g. 360), skipping the more complex neural network (e.g. 340)][e.g. the first set (e.g. magnitudes) may be reshaped onto hyper block, while the second subset (e.g. phases) may be provided in vectorial shape]. According to a thirteenth aspect when referring back to the twelfth aspect, the first neural network (e.g. 340) is configured to apply a magnitude mask, to output the result, or an intermediate version of the result, as magnitude masked values.

According to a fourteenth aspect when referring back to any of the preceding aspects, the neural network processor (e.g. 300, D1) is configured to provide the result (e.g. 380) in a shape corresponding to the second shape of the hyper block (e.g. 332) and having a plurality of result blocks (e.g. 382, 382a-382d) stacked one on the other along the second dimension, the apparatus being configured to stack the result blocks (e.g. 382, 382a-382d) in the first dimension [e.g. in such a way that the size of the first dimension is 1] and to perform a resampling by rearranging the positions of result segments (e.g. 387, 387a-387h), contained in the result blocks (e.g. 382, 382a-382d), in positions of corresponding features segments (e.g. 387, 387a-387h).

According to a fifteenth aspect when referring back to any of the preceding aspects, wherein the feature block generator is configured to perform a selection between:
the first, subsampling mode; and
the second, non-subsampling mode, wherein the feature block generator (e.g. CR1) is configured, in the second, non-subsampling mode, to:
   split the set of features into at least 2 feature subsets, each feature subset having [e.g. K, or at least K, with K>0 and in some cases preferably with K>1] features [e.g. time-frequency bins] in contiguous positions [e.g. in contiguous frequencies] [e.g. in some case, e.g. when L>0, some overlapping is possible, in such a way that each feature subset has at least one frequency bin of the immediately preceding or immediately subsequent feature subset], feature blocks being defined as feature subsets in the second, non-subsampling mode; and
   staple the feature blocks [e.g. which in this mode are the same of feature subsets] along the second dimension [e.g. channel dimension], thereby deriving a feature hyper block [e.g. the feature hyper block may therefore be in two dimensions (e.g. frequency and channels or another combination), or in three dimensions (e.g.., frequency, channels, and time or another combination)],
wherein the hyper block is provided to the neural network processor both in a first, subsampling mode [e.g. a mode in which the features of the first or fifth aspects are performed], and in a second, non-subsampling mode [e.g. the neural network processor and the classifier and/or the output post-processor (e.g. 500) operate as in the first or fifth aspects].

According to a sixteenth aspect when referring back to the fifteenth aspect, the feature block generator is configured to perform the selection between the first, subsampling mode and the second, non-subsampling mode based on a resolution of the input information signal, so as to select the first, subsampling mode in case of comparatively high resolution [e.g. above a predetermined resolution threshold], and the second, non-subsampling mode in case of comparatively reduced resolution [e.g. below a predetermined resolution threshold].

According to a seventeenth aspect when referring back to the fifteenth aspect, the feature block generator is configured to perform the selection between the first, subsampling mode and the second, non-subsampling mode based on a sampling frequency of the input information signal, so as to select the second, non-subsampling mode in case of comparatively reduced (e.g. low) sampling frequency [e.g. below a predetermined sampling frequency], and the first, subsampling mode in case of comparatively high sampling frequency [e.g. above a predetermined sampling frequency].

According to an eighteenth aspect when referring back to the fifteenth aspect, configured to recognize whether the input information signal, or the set of features, has bands having values continuously 0 [e.g. magnitude 0] or having values lower than a predetermined threshold [e.g. in case the input information signal is subjected to a passband, lowpass, or high pass filter], so as to select:
the first, subsampling mode, in case of determination that the input information signal, or the set of features, has bands with values continuously 0 [e.g. magnitude 0] or values continuously lower than the predetermined threshold [e.g. to split the set of features in such a way that at least one feature subset has only frequencies in the bands with values continuously 0 or values continuously lower than the predetermined threshold, and at least one other feature subset has only frequencies in the bands have not values continuously 0 or which have not values continuously lower than the predetermined threshold, so as to subsequently have at least one feature block having both at least one feature subset with only frequencies in the bands with values continuously 0 or values continuously lower than the predetermined threshold and at least one feature subset with frequencies which are not in the bands with values continuously 0 or values continuously lower than the predetermined threshold],
the second, non-subsampling mode, in case of determination that the input information signal, or the set of features, has bands with values which are not continuously 0 [e.g. magnitude 0] or values not continuously lower than the predetermined threshold.

According to a nineteenth aspect, there is provided a method for processing an input information signal [e.g. audio signal, video signal, radar signal, etc.], comprising:
extracting a set of features from the input information signal, the set of features having a first shape [e.g. the set of features may be a first set of features, e.g. different from (e.g. disjoint from) a further (e.g. second) set of features; when joined together, the first and second sets form a so-called "plurality of features"],
[e.g. in at least one first subsampling mode] reshaping the set of features from a first shape to a second shape by:
   segmenting [e.g. splitting] the set of features into at least 3 feature subsets, [e.g., a first, a second and third feature subset], each feature subset having a specific shape [e.g. the first feature subset having a third shape and the second feature subset having a fourth shape and the third feature subset having a fifth shape, etc.] [e.g. the first, second, third, etc. feature subsets may be equal with each other or may be different from each (e.g. in at least one dimension) other according to the particular example],
   performing a subsampling of the feature subsets to generate a plurality of feature blocks by stacking a selected set of the subsampled feature subsets along a first dimension [e.g. a first feature block of a sixth shape by stacking the first subsampled feature subsets along a first dimension][e.g. the first dimension may be a frequency dimension], [e.g. performing a second subsampling of the feature subsets to generate a second feature block of a seventh shape by stacking the second subsampled feature subsets along a first dimension],
   create a feature hyper-block of the second shape by stacking the plurality of feature blocks along a second dimension [e.g. the second dimension may be a channel dimension],
through a neural network [e.g. a second, further, set of features (e.g. phase values), different (e.g. disjoint) from the first set of features) may also be provided to the neural network; in examples, the feature hyper block (e.g., containing information on the magnitude values, but possibly not on phase values) may be provided to a first NN (e.g., DNN), while the output of DNN may be provided, together with the second (e.g. further) set of features (e.g., phase values) to the second NN (e.g., convolutional NN); the output of the neural network may be a set of values which may include complex values, each with real component and imaginary component] processing (e.g. 300, D1) the feature hyper block to obtain a first result; and
to post-processing the result to construct an output information signal and/or outputting a classification result [e.g. on the input signal].

According to a twentieth aspect, there is provided a method for processing an input information signal [e.g. audio signal, video signal, radar signal, etc.][e.g. it may be the apparatus of any of the preceding aspects], comprising:
extracting a set of features from the input information signal, the set of features having a first dimension [e.g. the set of features may be a first set of features (e.g. magnitude values), while a further (e.g. second) set of features may be phase values, not provided to the feature block generation; together, the first and second sets of features for the so-called "plurality of features"][e.g. the first dimension may be a frequency dimension];
performing a feature block generation (e.g. CR1) to reshape the set of features from a first shape to a second shape by:
   segmenting [e.g. splitting] the set of features into at least 3 feature subsets, each feature subset having [e.g. K, or at least K, with K>0 and in some cases preferably with K>1] features along at least one first dimension [e.g. bins e.g. time-frequency bins of contiguous frequencies] [e.g. in some case, e.g. when L>0, some overlapping is possible, in such a way that each feature subset has at least one frequency bin of the immediately preceding or immediately subsequent feature subset] [e.g. a step of ordering the at least 3 feature subsets according to their frequencies is possible, but it is also possible that the splitting is performed so as to obtain the feature subsets being already ordered];
   performing multiple subset-wise subsamplings on the feature subsets [e.g. according to a subsampling factor N] [e.g. the feature subsets being ordered according to their frequencies] and, from each subsampling, generating a feature block by stacking [e.g. juxtaposing], along the first dimension [e.g. a frequency dimension], the subsampled feature subsets onto the same feature block; and
   stacking [e.g. juxtaposing] the feature blocks along a second dimension [e.g. channel dimension] thereby deriving a feature hyper block which is in the second shape, and
through a neural network, NN [e.g. embodying a DNN or a convolutional NN, but in some examples it may embody a DNN (e.g. a fully connected NN) followed by a convolutional NN] processing the feature hyper block to obtain a result [e.g. a second set of features (e.g. phase values) may also be provided to the neural network processor; in examples, the feature hyper block (e.g., containing information on the magnitude values, but possibly not on phase values) may be provided to a first NN (e.g., DNN), while the output of DNN may be provided, together with the second set of features (e.g., phase values) to the second NN (e.g., convolutional NN); the output of the neural network processor may be a set of values which may include complex values, each with real component and imaginary component, and may be a tensor (e.g. a vector)]; and
post-processing the result to construct an output information signal [e.g. which may be, for example, a processed version (e.g. a masked version) of the input information signal] and/or to provide a classification on the input information signal [e.g. the output post-processing may receive and process the result, so as to provide a classification (e.g. as an output) between at least one first classification result, indicative of a first classification result of the input information signal, and at least one second classification result, indicative of a first classification result of the input information signal; for example, the NN processor may output one or more probability(ies) obtained by processing the input information signal, and the output post-processor may for example apply threshold(s) to the probability(ies), so as to provide a classification from the comparison between the threshold(s) and the probability(ies)][e.g. therefore, the apparatus operates as a classifier that classifies the input information signal].

According to a twenty-first aspect, there is provided a non-transitory storage unit storing instructions which, when executed by a processor, cause the processor to perform the methods referred to above.

### Other examples

Here, different inventive examples, embodiments and aspects are described. Also, further embodiments will be defined by the enclosed claims. It should be noted that any embodiments as defined by the claims can be supplemented by any of the details (features and functionalities) described in the chapters above.

Also, the embodiments described in the following and/or previous chapters can be used individually, and can also be supplemented by any of the features in another chapter, or by any feature included in the claims. Also, it should be noted that individual aspects described herein can be used individually or in combination. Thus, details can be added to each of said individual aspects without adding details to another one of said aspects. It should also be noted that the present disclosure describes, explicitly or implicitly, features of a mobile communication device and of a receiver and of a mobile communication system. Thus, any of the features described herein can be used in the context of a mobile communication device and in the context of a mobile communication system (e.g. comprising a satellite). Therefore, disclosed techniques are suitable for all fixed satellite services (FSS) and mobile satellite services (MSS). Moreover, features and functionalities disclosed herein relating to a method can also be used in an apparatus. Furthermore, any features and functionalities disclosed herein with respect to an apparatus can also 30 be used in a corresponding method. In other words, the methods disclosed herein can be supplemented by any of the features and functionalities described with respect to the apparatuses. Also, any of the features and functionalities described herein can be implemented in hardware or in software, or using a combination of hardware and software, as described below. Depending on certain implementation requirements, examples may be implemented in hardware. The implementation may be performed using a digital storage medium, for example a floppy disk, a Digital Versatile Disc (DVD), a Blu-Ray (registered trademark) Disc, a Compact Disc (CD), a Read-only Memory (ROM), a Programmable Read-only Memory (PROM), an Erasable and Programmable Read-only Memory (EPROM), an Electrically Erasable Programmable Read-Only Memory (EEPROM) or a flash memory, having electronically readable control signals stored thereon, which cooperate (or are capable of cooperating) with a programmable computer system such that the respective method is performed. Therefore, the digital storage medium may be computer readable. Generally, examples may be implemented as a computer program product with program instructions, the program instructions being operative for performing one of the methods when the computer program product runs on a computer. The program instructions may for example be stored on a machine-readable medium.

Other examples comprise the computer program for performing one of the methods described herein, stored on a machine-readable carrier. In other words, an example of method is, therefore, a computer program having a program-instructions for performing one of the methods described herein, when the computer program runs on a computer. A further example of the methods is, therefore, a data carrier medium (or a digital storage medium, or a computer-readable medium) comprising, recorded thereon, the computer program for performing one of the methods described herein. The data carrier medium, the digital storage medium or the recorded medium are tangible and/or non-transitionary, rather than signals which are intangible and transitory. A further example comprises a processing unit, for example a computer, or a programmable logic device performing one of the methods described herein. A further example comprises a computer having installed thereon the computer program for performing one of the methods described herein. A further example comprises an apparatus or a system transferring (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver. In some examples, a programmable logic device (for example, a field programmable gate array) may be used to perform some or all of the functionalities of the methods described herein. In some examples, a field programmable gate array may cooperate with a microprocessor in order to perform one of the methods described herein. Generally, the methods may be performed by any appropriate hardware apparatus. The above described examples are illustrative for the principles discussed above. It is understood that modifications and variations of the arrangements and the details described herein will be apparent. It is the intent, therefore, to be limited by the scope of the impending patent claims and not by the specific details presented by way of description and explanation of the examples herein.

## Claims

1. Apparatus (10) for processing an input information signal (20), comprising:
a feature extractor (100) for extracting a set of features (102) from the input information signal (20), the set of features (102) having a first shape,
a feature block generator (200, CR1) configured to reshape the set of features (102) from a first shape to a second shape by:
segmenting (210) the set of features (102) into at least 3 feature subsets (212, 212a-212h), each feature subset (212, 212a-212h) having a specific shape,
performing a subsampling (220, 220a, 220b) of the feature subsets (212) to generate a plurality of feature blocks (222, 222a-222d) by stacking a selected set of the subsampled feature subsets (212, 212a-212h) along a first dimension,
creating (230) a feature hyper-block (332) of the second shape by stacking the plurality of feature blocks (222, 222a-222d) along a second dimension,
a neural network processor (300, D1) configured to process the feature hyper block (332) to obtain a first result (380); and
an output post-processor (P2, 700) configured to post-process the result (380) to construct an output information signal (40) and/or to output a classification result.

2. The apparatus of claim 1 wherein each of the feature subsets (212, 212a-212h) is smaller than the first shape.

3. The apparatus of any of the preceding claims wherein the feature subsets (212, 212a-212h) have an overlapping range with each other.

4. The apparatus of the preceding claims, wherein the segmentation of the set of features and/or the subsampling is configured based on the size of the set of features and/or the statistics of the input information signal.

5. Apparatus (1) for processing an input information signal (20), comprising:
a feature extractor (100) for extracting a set of features (102) from the input information signal, the set of features having a first dimension;
a feature block generator (100, CR1) configured, in at least one first, subsampling mode, to reshape the set of features (102) from a first shape to a second shape by:
segmenting (210) the set of features (102) into at least 3 feature subsets (212, 212a-212h), each feature subset (212, 212a-212h) having features along at least one first dimension;
performing multiple subset-wise subsamplings (220a, 220b) on the feature subsets (212, 212a-212h) and, from each subsampling (220a, 220b), generating a feature block (222, 222a-222d) by stacking, along the first dimension, the subsampled feature subsets (212, 212a-212h) onto the same feature block (222, 222a-222d); and
stacking (230) the feature blocks (222, 222a-222d) along a second dimension thereby deriving a feature hyper block (332) which is in the second shape, and
a neural network, NN, processor (300, D1) configured to process the feature hyper block (332) to obtain a result (380); and
an output post-processor (500, P2) configured to post-process the result (380) to construct an output information signal (40) and/or to provide a classification on the input information signal.

6. The apparatus of any of the preceding claims, configured to receive an overlapping parameter indicating how many features are shared between each subset and the immediately contiguous subset.

7. The apparatus of any of the preceding claims, wherein the neural network processor (300, D1) is configured to subject the feature hyper block (332) to a first neural network (340, DMM_{M}), to thereby derive an intermediate result (352), and to provide the intermediate result (352) to a second neural network (360, DMM_{MP}), the second neural network (360, DMM_{MP}) being less complex than the first neural network (340, DMM_{M}).

8. The apparatus of claim 7, wherein the first neural network (340) outputs the intermediate result (352) as a tensor, in such a way that each element of the tensor is associated with a position in the set of features (102), wherein the neural network processor (300, D1) is configured to rearrange the tensor (352) according to the positions in the set of features (102), in association with features of a second, further set of features (331), where the rearranged tensor (353) and the features of the further set of features (331) are inputted to the second neural network (360).

9. The apparatus of any of the preceding claims, wherein the neural network processor (300, D1) is configured to provide the intermediate result in a shape, each position of which corresponds to at least one position in the first shape of the set of features, wherein the apparatus is configured to reshape the intermediate result according to the first shape of the set of features.

10. The apparatus of any of the preceding claims, wherein the neural network processor is configured to provide the intermediate result (352) having a smaller or larger shape than the set of features (102) in the first shape, wherein each position of the intermediate result (352) corresponds to multiple positions of the first shape of the set of features (102) or multiple positions of the intermediate result (352) correspond to single positions of the first shape of the set of features (102), wherein the apparatus is configured to resample and/or reshape the result to conform with the set of features in the first shape.

11. The apparatus of any of the preceding claims, wherein the neural network processor (300, D1) is configured to provide the result in a shape, each position of which corresponds to at least one position in the first shape of the set of features, wherein the apparatus is configured to reshape the result according to the first shape of the set of features.

12. The apparatus of any of the preceding claims, wherein the set of features (102) is a first set of features which are magnitude values, and a second set of features (331) are phase values.

13. The apparatus of claim 12, wherein the first neural network (340) is configured to apply a magnitude mask, to output the result, or an intermediate version of the result, as magnitude masked values.

14. The apparatus of any of the preceding claims, wherein the neural network processor (300, D1) is configured to provide the result (380) in a shape corresponding to the second shape of the hyper block (332) and having a plurality of result blocks (382, 382a-382d) stacked one on the other along the second dimension, the apparatus being configured to stack the result blocks (382, 382a-382d) in the first dimension and to perform a resampling by rearranging the positions of result segments (387, 387a-387h), contained in the result blocks (382, 382a-382d), in positions of corresponding features segments (387, 387a-387h).

15. The apparatus of any of the preceding claims, wherein the feature block generator is configured to perform a selection between:
a first, subsampling mode; and
a second, non-subsampling mode, wherein the feature block generator (CR1) is configured, in the second, non-subsampling mode, to:
split the set of features into at least 2 feature subsets, each feature subset having features in contiguous positions, feature blocks being defined as feature subsets in the second, non-subsampling mode; and
staple the feature blocks along the second dimension, thereby deriving a feature hyper block,
wherein the hyper block is provided to the neural network processor both in a first, subsampling mode, and in a second, non-subsampling mode.

16. The apparatus of claim 15, wherein the feature block generator is configured to perform the selection between the first, subsampling mode and the second, non-subsampling mode based on a resolution of the input information signal, so as to select the first, subsampling mode in case of comparatively high resolution, and the second, non-subsampling mode in case of comparatively reduced resolution.

17. The apparatus of claim 15, wherein the feature block generator is configured to perform the selection between the first, subsampling mode and the second, non-subsampling mode based on the sampling frequency of the input information signal, so as to select the second, non-subsampling mode in case of comparatively reduced sampling frequency, and the first, subsampling mode in case of comparatively high sampling frequency.

18. The apparatus of claim 15, configured to recognize whether the input information signal, or the set of features, has bands having values continuously 0 or having values lower than a predetermined threshold, so as to select:
the first, subsampling mode, in case of determination that the input information signal, or the set of features, has bands with values continuously 0 or values continuously lower than the predetermined threshold,
the second, non-subsampling mode, in case of determination that the input information signal, or the set of features, has bands with values which are not continuously 0 or values not continuously lower than the predetermined threshold.

19. Method for processing an input information signal, comprising:
extracting a set of features from the input information signal, the set of features having a first shape,
reshaping the set of features from a first shape to a second shape by:
segmenting the set of features into at least 3 feature subsets, each feature subset having a specific shape,
performing a subsampling of the feature subsets to generate a plurality of feature blocks by stacking a selected set of the subsampled feature subsets along a first dimension,
create a feature hyper-block of the second shape by stacking the plurality of feature blocks along a second dimension,
through a neural network processing (300, D1) the feature hyper block to obtain a first result; and
to post-processing the result to construct an output information signal and/or outputting a classification result.

20. Method for processing an input information signal, comprising:
extracting a set of features from the input information signal, the set of features having a first dimension;
performing a feature block generation (CR1) to reshape the set of features from a first shape to a second shape by:
segmenting the set of features into at least 3 feature subsets, each feature subset having features along at least one first dimension;
performing multiple subset-wise subsamplings on the feature subsets and, from each subsampling, generating a feature block by stacking, along the first dimension, the subsampled feature subsets onto the same feature block; and
stacking the feature blocks along a second dimension thereby deriving a feature hyper block which is in the second shape, and
through a neural network, NN processing the feature hyper block to obtain a result; and
post-processing the result to construct an output information signal and/or to provide a classification on the input information signal.

21. Non-transitory storage unit storing instructions which, when executed by a processor, cause the processor to perform the method of claim 19 or 20.
